# EUROPEAN PATENT SPECIFICATION

(11) **EP 4 293 551 B1**
(45) Date of publication and mention of the grant of the patent: **25.11.2026**
(21) Application number: 21928903.0
(22) Date of filing: 30.12.2021
(51) Int. Cl.: G06F 21/57, H04L 9/40, G06F 21/31, G06F 21/55

(54) **USER ACCOUNT RISK MEASUREMENT METHOD AND RELATED APPARATUS**
VERFAHREN ZUR MESSUNG DES RISIKOS EINES BENUTZERKONTOS UND ZUGEHÖRIGE VORRICHTUNG
PROCÉDÉ DE MESURE DE RISQUE DE COMPTE UTILISATEUR ET APPAREIL ASSOCIÉ

(30) Priority: 05.03.2021 CN 202110246454
(43) Date of publication of application: 20.12.2023
(73) Proprietor: Huawei Technologies Co., Ltd., Shenzhen, Guangdong 518129 (CN)
(72) Inventor: CUI, Jing, Shenzhen, Guangdong 518129 (CN); WU, Huajia, Shenzhen, Guangdong 518129 (CN); LI, Le, Shenzhen, Guangdong 518129 (CN); RUI, Qingrong, Shenzhen, Guangdong 518129 (CN); LI, Zhihua, Shenzhen, Guangdong 518129 (CN)
(74) Representative: Pfenning, Meinig & Partner mbB
(86) International application number: PCT/CN2021/143330
(87) International publication number: WO 2022/183832

(56) References cited:
- WO-A1-2012/120355
- CN-A- 104 426 847
- CN-A- 108 076 018
- CN-A- 110 677 430
- CN-A- 111 901 347
- CN-A- 112 231 692
- US-A1- 2016 226 905
- US-A1- 2017 161 503
- US-A1- 2018 336 353

## Description

### TECHNICAL FIELD

This application relates to the field of network security technologies, and in particular, to a risk measurement method for a user account, a related apparatus, computer-readable storage medium and computer program product in a zero trust security network architecture.

### BACKGROUND

With the development of informatization technologies such as mobile Internet, big data, and cloud computing, network risks and threats are increasing, a conventional security protection mode in which a trust system is established based on a network border does not work gradually, and a zero trust network security technology emerges. In a zero trust architecture, all terminal devices that access a data resource are untrusted. A zero trust architecture network system needs to perform dynamic trust evaluation on the terminal device, to determine whether the terminal device has permission to access the data resource.

Generally, the zero trust architecture includes a terminal device, an environment perception service apparatus, and a policy control apparatus. First, the environment perception service apparatus obtains a user behavior log of the terminal device, detects a threat event (for example, brute force cracking) based on the user behavior log, and then evaluates a security risk of the terminal device based on the detected threat event, to obtain an evaluation result. Finally, the policy control apparatus adjusts access permission of the terminal device based on the evaluation result. In this way, the access permission of the terminal device to the data resource is dynamically adjusted.

In a conventional method, the environment perception service apparatus first detects the threat event based on the user behavior log, and then evaluates the threat event, to generate the evaluation result. Due to lagging in generating the evaluation result, the policy control apparatus cannot limit the access permission of the terminal device in time, which gives a malicious attacker enough time to attack, and puts a zero trust system in danger.

US 2018/336353 A1 discloses a system which receives anomaly scores regarding an entity from a plurality of detectors, produces a weighted anomaly score for the entity based on the anomaly scores and respective weights assigned to the plurality of detectors, the weights based on historical performance of the plurality of detectors, determines an impact based on a context of the entity, wherein the impact is indicative of an effect that the entity would have a computing environment if the entity were to exhibit anomalous behavior, and computes a risk score for the entity based on the weighted anomaly score and the determined impact.

US 2017/161503 A1 describes systems and techniques for determining and displaying risk indicators. A set of event logs occurring in a time interval and associated with a user account retrieving may be retrieved from an event log database. For individual event logs in the set of event logs, a context may be determined. A resource associated with the individual log may have an associated classification. An activity risk associated with the individual event log may be determined based at least in part on the first context and, if applicable, on the associated classification. For individual event logs in the set of event logs, a risk indicator may be determined based at least in part on the activity risk. In some cases, a cumulative risk indicator may be determined for the particular time interval based on the risk indicators associated with the individual event logs.

US 2016/226905 A1 discloses that threat risks to an enterprise are detected and assessed by assembling singular threats identified using both direct and behavioral threat indicators into composite threats to create complex use cases across multiple domains, and to amplify risks along kill chains of known attacks for early detection. Composite threat risk scores are computed from risk scores of singular threats to exponentially increase with the number of events observed along the kill chain. Composite threats are combined with normalized values of static risk and inherent risk for an entity of the enterprise to produce an entity risk score representative of the overall risk to the entity.

### SUMMARY

Embodiments of this application provide a risk measurement method for a user account, a related apparatus, computer-readable storage medium, and computer program product. The invention is defined by the appended claims.
The method is applied to a zero trust architecture, to improve security of the zero trust architecture. The zero trust architecture includes a terminal device, an authentication service apparatus, an environment perception service apparatus, a policy control apparatus, and a policy execution apparatus. The terminal device is configured to receive at least one operation of a user and authentication information corresponding to the at least one operation. The authentication service apparatus is configured to: receive the authentication information from the terminal device, verify the authentication information, generate a user behavior log of the terminal device, and send the user behavior log to the environment perception service apparatus. The user behavior log is used to record a user behavior occurring on a user account. After obtaining the user behavior log, the environment perception service apparatus performs risk evaluation on the user account based on the user behavior log, and sends a risk evaluation result to the policy control apparatus. The policy control apparatus adjusts, based on the risk evaluation result, access permission of the user account to access a data resource. The policy execution apparatus is configured to control (block or allow) access of the user account to an application server based on the access permission of the user account that is delivered by the policy control apparatus.

According to a first aspect, an embodiment of this application provides a risk measurement method for a user account. The method is applied to an environment perception service apparatus in a zero trust architecture. The environment perception service apparatus obtains a user behavior log of a terminal device in a first time period. The user behavior log records at least one user behavior that occurs on a user account in the first time period and information related to the user behavior. The at least one user behavior belongs to at least one behavior type. The behavior type includes a login type behavior, an APP authentication type behavior, or an API authentication type behavior. Then, the environment perception service apparatus determines a behavior feature of a first behavior type based on the user behavior log. The first behavior type is one behavior type of the at least one behavior type. For example, the first behavior type is the login type behavior, the APP authentication type behavior, or the API authentication type behavior. The environment perception service apparatus determines a first danger degree value of the user account for the behavior feature of the first behavior type. The first danger degree value is a danger degree value of the first behavior type. In this embodiment of this application, the environment perception service apparatus can directly evaluate a danger degree of the user account based on the behavior feature reflected in the user behavior log, and does not need to perform evaluation until a threat event is generated. Time of evaluating the danger degree is basically synchronized with occurrence time of the user behavior, and the environment perception service apparatus evaluates the danger degree of the user account in time, so that a policy control apparatus can adjust access permission of the user account in time, to prevent a dangerous user account from accessing a data resource of an application server, and improve security of a zero trust system.

The at least one user behavior includes a plurality of user behaviors, and the plurality of user behaviors belong to at least two or more behavior types. For example, the plurality of user behaviors include one login behavior and one APP authentication behavior. The login behavior belongs to the login type behavior, and the APP authentication behavior belongs to the APP authentication type behavior. That is, each behavior type includes at least one user behavior. A model for calculating the first danger degree value is preconfigured in the environment perception service apparatus. The model includes a plurality of behavior types, and two or more behavior types in the model are arranged in a predetermined sequence. For example, the plurality of behavior types are three behavior types: the login type behavior, the APP authentication type behavior, and the API authentication type behavior. A sequence of the three behavior types is: the login type behavior → the APP authentication type behavior → the API authentication type behavior. To be specific, "the login type behavior" is at a 1st position in the predetermined sequence, "the APP authentication type behavior" is at a 2nd position in the predetermined sequence, and "the API authentication type behavior" is at a 3rd position in the predetermined sequence. Behavior types at different positions correspond to different danger coefficients. In this embodiment, to improve the security of the zero trust system, the first danger degree value of the first behavior type is calculated by using information in two dimensions, to be specific, the environment perception service apparatus can determine the first danger degree value of the user account based on the position of the first behavior type in the predetermined sequence and the behavior feature of the first behavior type. The environment perception service apparatus can more accurately evaluate the first danger degree value of the first behavior type.

In a possible implementation, the behavior feature includes a behavior result and a quantity of consecutive occurrence times of the user behavior, the behavior result includes succeed or fail, the plurality of user behaviors include a first user behavior, and that the environment perception service apparatus determines the first danger degree value of the user account based on the position of the first behavior type in the predetermined sequence and the behavior feature of the first behavior type specifically includes: First, the environment perception service apparatus determines a first danger coefficient based on the position of the first behavior type in the predetermined sequence. When a behavior result of the first user behavior is fail, until an occurrence moment of the first user behavior, the environment perception service apparatus determines a quantity of consecutive occurrence times of a user behavior whose behavior result is fail and that is included in the first behavior type. Then, the environment perception service apparatus determines a second danger coefficient based on the quantity of consecutive occurrence times of the user behavior whose behavior result is fail. Finally, the environment perception service apparatus determines the danger degree value of the first behavior type based on the first danger coefficient and the second danger coefficient. In this embodiment, the predetermined sequence of the plurality of behavior types in the model is preset based on a sequence in which user behaviors may occur in an actual service. For example, in the actual service, a user needs to perform a login type operation (for example, system login) first. After performing the login operation, the user may perform an APP authentication type operation, and then perform an API authentication type operation. In this way, the environment perception service apparatus sets the first danger coefficient for each behavior type based on an occurrence sequence of the behavior type in an actual service process. For example, a danger coefficient of the login type behavior is less than a danger coefficient of APP authentication, to be specific, an APP authentication attack poses a greater threat on network security than a login attack. A danger degree value of the user account that is obtained through calculation by using the position of the behavior type in the predetermined sequence and the behavior feature of the behavior type can better reflect a risk brought by the user behavior in the actual service.

In a possible implementation, the at least two or more behavior types include the first behavior type and a second behavior type. In the predetermined sequence, if the position of the first behavior type is before a position of the second behavior type, a danger coefficient corresponding to the first behavior type is less than a danger coefficient corresponding to the second behavior type. The danger coefficient corresponding to the first behavior type at the front is less than the danger coefficient corresponding to the second behavior type at the rear. This can better reflect the risk brought by the user behavior in the actual service.

In a possible implementation, the plurality of user behaviors further include a second user behavior, and when a behavior result of the second user behavior is succeeded, the method further includes: Until an occurrence moment of the second user moment, the environment perception service apparatus determines a quantity of consecutive occurrence times of a user behavior whose behavior result is succeed and that is included in the first behavior type. The occurrence moment of the second user behavior is after the occurrence moment of the first user behavior. Then, the environment perception service apparatus determines a first recovery coefficient based on the quantity of consecutive occurrence times of the user behavior whose behavior result is succeed. Further, the environment perception service apparatus determines the danger degree value of the first behavior type based on the first danger coefficient, the second danger coefficient, and the first recovery coefficient. In this embodiment, the first recovery coefficient is used to recover a credit score of the first behavior type, in other words, the first recovery coefficient is used to decrease the danger degree value of the first behavior type. As the quantity of consecutive occurrence times of the user behavior whose behavior result is succeed increases, the environment perception service apparatus can recover a credit score of the user account. In this way, a problem that the access permission of the user account is reduced in the actual service because the credit score of the user account is decreased due to a non-attack behavior is resolved. The environment perception service apparatus can dynamically recover the access permission of the user account, to reduce inconvenience caused to the user due to a misoperation of the user.

In a possible implementation, the method further includes: The environment perception service apparatus determines interval duration between the occurrence moment of the second user behavior and an occurrence moment of a previous user behavior, and then determines a second recovery coefficient based on the interval duration. The second recovery coefficient is used to recover the credit score of the first behavior type. The environment perception service apparatus compares the first recovery coefficient with the second recovery coefficient. When the first recovery coefficient is less than the second recovery coefficient, the environment perception service apparatus determines the danger degree value of the first behavior type based on the first danger coefficient, the second danger coefficient, and the first recovery coefficient. The environment perception service apparatus compares the first recovery coefficient with second recovery coefficient, determines a smaller value of the first recovery coefficient and the second recovery coefficient, and calculates the danger degree value (or the credit score) of the first behavior type based on the smaller danger recovery coefficient, so that the credit score can be recovered quickly. When the credit score is decreased due to the misoperation of the user, inconvenience caused to the user due to the misoperation of the user is reduced.

In a possible implementation, when the first recovery coefficient is greater than the second recovery coefficient, the method further includes: The environment perception service apparatus determines the danger degree value of the first behavior type based on the first danger coefficient, the second danger coefficient, and the second recovery coefficient.

In a possible implementation, the method further includes: The environment perception service apparatus receives a risk event from the terminal device. The risk event includes a terminal risk event and/or a traffic threat event. Then, the environment perception service apparatus determines a second danger degree value of the risk event. The environment perception service apparatus determines a third risk degree value of the terminal device based on the first danger degree value of the user account and the second danger degree value of the risk event. Finally, the environment perception service apparatus outputs the third risk degree value. In this embodiment, the environment perception service apparatus determines the danger degree value of the terminal device and the danger degree value of the user account, and then calculates a comprehensive danger degree value based on the danger degree value of the terminal device and the danger degree value of the user account. The environment perception service apparatus performs multi-dimensional evaluation on an access subject (including the terminal device and the user account), so that the first danger degree value of the first behavior type can be more accurately evaluated, to improve the security of the zero trust system.

According to a second aspect, an embodiment of this application provides a risk measurement apparatus for a user account, including:
a receiving module, configured to obtain a user behavior log of a terminal device in a first time period, where the user behavior log records at least one user behavior that occurs on a user account in the first time period, the at least one user behavior belongs to at least one behavior type, and the behavior type includes a login type behavior, an application APP authentication type behavior, or an application programming interface API authentication type behavior; and
a processing module, configured to determine a behavior feature of a first behavior type based on the user behavior log received by the receiving module, where the first behavior type is one behavior type of the at least one behavior type.

The processing module is further configured to determine a first danger degree value of the user account for the described behavior feature of the first behavior type, where the first danger degree value is a danger degree value of the first behavior type.

The at least one user behavior includes a plurality of user behaviors, the plurality of user behaviors belong to at least two or more behavior types, and the two or more behavior types are arranged in a predetermined sequence in a model for calculating the first danger degree value.

The processing module is further configured to determine the first danger degree value of the user account based on a position of the first behavior type in the predetermined sequence and the behavior feature of the first behavior type.

In a possible implementation, the behavior feature includes a behavior result and a quantity of consecutive occurrence times of the user behavior, the behavior result includes succeed or fail, and the plurality of user behaviors include a first user behavior.

The processing module is further specifically configured to:
determine a first danger coefficient based on the position of the first behavior type in the predetermined sequence;
when a behavior result of the first user behavior is fail, until an occurrence moment of the first user behavior, determine a quantity of consecutive occurrence times of a user behavior whose behavior result is fail and that is included in the first behavior type;
determine a second danger coefficient based on the quantity of consecutive occurrence times of the user behavior whose behavior result is fail; and
determine the danger degree value of the first behavior type based on the first danger coefficient and the second danger coefficient.

In a possible implementation, the at least two or more behavior types include the first behavior type and a second behavior type. In the predetermined sequence, if the position of the first behavior type is before a position of the second behavior type, a danger coefficient corresponding to the first behavior type is less than a danger coefficient corresponding to the second behavior type.

In a possible implementation, the plurality of user behaviors further include a second user behavior, and when a behavior result of the second user behavior is succeed, the processing module is further specifically configured to:
until an occurrence moment of the second user moment, determine a quantity of consecutive occurrence times of a user behavior whose behavior result is succeed and that is included in the first behavior type, where the occurrence moment of the second user behavior is after the occurrence moment of the first user behavior; and
determine a first recovery coefficient based on the quantity of consecutive occurrence times of the user behavior whose behavior result is succeed; and
determine the danger degree value of the first behavior type based on the first danger coefficient, the second danger coefficient, and the first recovery coefficient.

In a possible implementation, the processing module is further configured to:
determine interval duration between the occurrence moment of the second user behavior and an occurrence moment of a previous user behavior, and determine a second recovery coefficient based on the interval duration;
compare the first recovery coefficient with the second recovery coefficient; and
when the first recovery coefficient is less than the second recovery coefficient, determine the danger degree value of the first behavior type based on the first danger coefficient, the second danger coefficient, and the first recovery coefficient.

In a possible implementation, when the first recovery coefficient is greater than the second recovery coefficient, the processing module is further configured to:
determine the danger degree value of the first behavior type based on the first danger coefficient, the second danger coefficient, and the second recovery coefficient.

In a possible implementation, the apparatus further includes an output module.

The receiving module is further configured to receive a risk event from the terminal device.

The processing module is further configured to: determine a second danger degree value of the risk event, and determine a third risk degree value of the terminal device based on the first danger degree value of the user account and the second danger degree value of the risk event.

The output module is further configured to output the third risk degree value.

According to a third aspect, an embodiment of this application provides an electronic device, including a processor. The processor is coupled to at least one memory, and the processor is configured to read a computer program stored in the at least one memory, to enable the electronic device to perform the method according to any one of the implementations of the first aspect.

According to a fourth aspect, an embodiment of this application provides a computer-readable medium. The computer-readable storage medium is configured to store a computer program, and when the computer program is run on a computer, the computer is enabled to perform the method according to any one of the first aspect.

According to a fifth aspect, an embodiment of this application provides a chip, including a processor and a communication interface. The processor is configured to read instructions to perform the method according to any one of the first aspect.

According to a sixth aspect, an embodiment of this application provides a computer program product. The computer program product includes computer program code, and when the computer program code is executed by a computer, the computer is enabled to perform the method according to any one of the first aspect.

### BRIEF DESCRIPTION OF DRAWINGS

FIG. 1A and FIG. 1B are schematic diagrams of application scenarios of two zero trust architectures according to an embodiment of this application;
FIG. 2 is a schematic flowchart of steps of an embodiment of a risk measurement method for a user account according to an embodiment of this application;
FIG. 3 is a schematic flowchart of steps in which an environment perception service apparatus determines a quantity of consecutive occurrence times of a danger behavior according to an embodiment of this application not encompassed by the wording of the claims;
FIG. 4 is a schematic diagram of a change of a second danger coefficient as a quantity of consecutive occurrence times of a danger behavior increases according to an embodiment of this application;
FIG. 5 is a schematic flowchart of steps in which an environment perception service apparatus determines a danger degree value of a first behavior type based on a first danger coefficient and a second danger coefficient according to an embodiment of this application;
FIG. 6 is a schematic flowchart of steps in which an environment perception service apparatus determines a first danger recovery coefficient based on a quantity of consecutive occurrence times of a security behavior according to an embodiment of this application;
FIG. 7A is a schematic diagram of a change of a first recovery coefficient as a quantity of consecutive occurrence times of a security behavior increases according to an embodiment of this application;
FIG. 7B is a schematic diagram of a change of a second recovery coefficient as interval duration between occurrence moments of two adjacent user behaviors increases according to an embodiment of this application;
FIG. 8 is a schematic diagram of a structure of an embodiment of a risk measurement apparatus for a user account according to an embodiment of this application; and
FIG. 9 is a schematic diagram of a structure of an embodiment of an electronic device according to an embodiment of this application not encompassed by the wording of the claims.

### DESCRIPTION OF EMBODIMENTS

The following describes technical solutions in embodiments of this application with reference to the accompanying drawings in embodiments of this application. In the specification, claims, and accompanying drawings of this application, terms such as "first" and "second" are intended to distinguish between objects but do not necessarily indicate a specific order or sequence. It should be understood that terms used in such a way are interchangeable in proper circumstances.

In a zero trust architecture, a conventional method is to evaluate security of a terminal device. An environment perception service apparatus needs to first detect a threat event based on a user behavior log. Because the user behavior log is generated after an access behavior of the terminal device occurs, and a process of detecting the threat event takes a specific period of time, generation of an evaluation result is lagged. For example, the environment perception service apparatus detects a preset quantity of "login fail" (a user behavior) within a preset time period (for example, 20 minutes), and the environment perception service apparatus determines that a threat event (for example, brute force cracking) is generated, and then evaluates the threat event to generate an evaluation result. In this case, generation of the evaluation result is lagged relative to actual time at which the user behavior occurs. Consequently, the policy control apparatus cannot limit access permission of the terminal device in time, which gives a malicious attacker enough time to attack, and puts a zero trust system in danger.

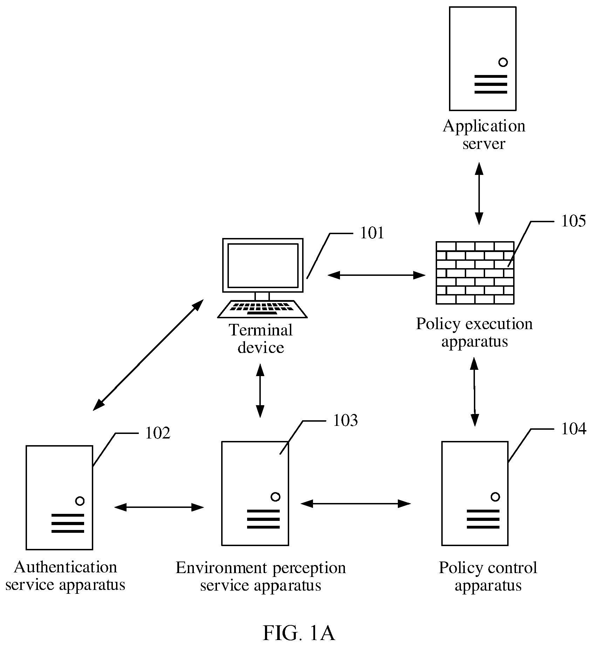

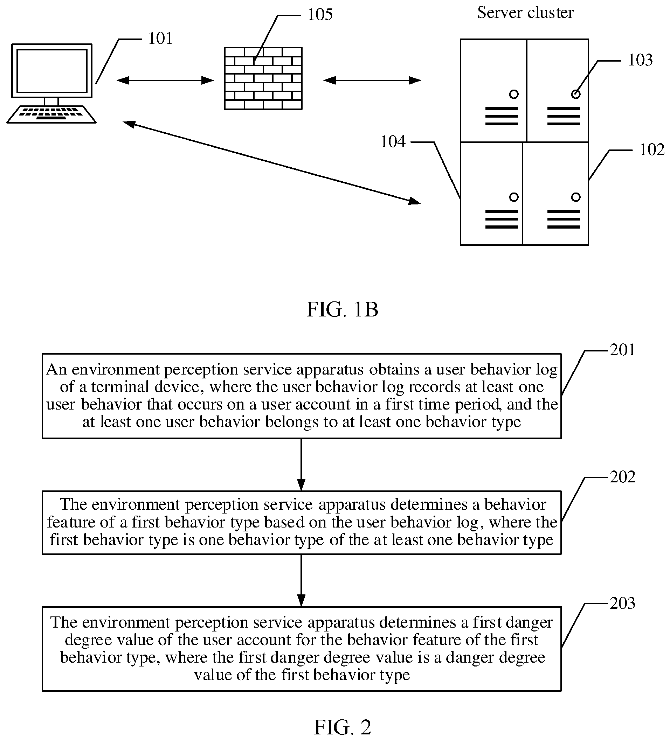

Based on the foregoing problem, this application provides a risk measurement method for a user account. The method is applied to a zero trust network security architecture (also referred to as a "zero trust architecture" or a "zero trust system" for short). FIG. 1A and FIG. 1B are schematic diagrams of application scenarios of zero trust architectures according to an embodiment of this application. Refer to FIG. 1A and FIG. 1B. The zero trust architecture includes a terminal device 101, an authentication service apparatus 102, an environment perception service apparatus 103, a policy control apparatus 104, and a policy execution apparatus 105. The terminal device 101 is communicatively connected to the authentication service apparatus 102. Both the terminal device 101 and the authentication service apparatus 102 are communicatively connected to the environment perception service apparatus 103. Both the environment perception service apparatus 103 and the policy execution apparatus 105 are communicatively connected to the policy control apparatus 104. The terminal device 101 is communicatively connected to an application server by using the policy execution apparatus 105. The terminal device 101 includes but is not limited to a mobile phone (mobile phone), a tablet computer (Pad), a computer, a personal computer (personal computer, PC), a terminal in an internet of things (internet of things, IoT) system, or the like. The policy execution apparatus 105 is a network forwarding device, or the policy execution apparatus 105 is a functional module deployed in the network forwarding device. The network forwarding device includes but is not limited to a firewall, a switch, a router, a gateway, a network bridge, and the like.

Optionally, the environment perception service apparatus 103, the authentication service apparatus 102, and the policy control apparatus 104 are computer devices separately deployed, or the environment perception service apparatus 103, the authentication service apparatus 102, and the policy control apparatus 104 are computer cluster devices, or the environment perception service apparatus 103, the authentication service apparatus 102, and the policy control apparatus 104 are functional modules deployed in the computer cluster device. In this application, an example in which the environment perception service apparatus 103, the authentication service apparatus 102, and the policy control apparatus 104 are servers is used for description. Optionally, as shown in FIG. 1A, the environment perception service apparatus 103, the authentication service apparatus 102, and the policy control apparatus 104 are separately deployed. Alternatively, as shown in FIG. 1B, the environment perception service apparatus 103, the authentication service apparatus 102, the policy control apparatus 104, and the application server are deployed in a server cluster in a centralized manner.

Further, a function of an apparatus in the zero trust architecture in this application is described.

The terminal device is configured to receive at least one operation (for example, a login operation, an application (application, APP) authentication operation, or an application programming interface (application programming interface, API) authentication operation) of a user and authentication information (for example, an account name and a password) corresponding to the at least one operation.

The authentication service apparatus is configured to: receive the authentication information from the terminal device, query a database based on the authentication information, compare whether the received authentication information is consistent with authentication information stored in the database, perform identity authentication on a user account to obtain an authentication result, generate a user behavior log of the terminal device, and send the user behavior log to the environment perception service apparatus. The user behavior log records at least one user behavior (that is, an operation of a user) that occurs in a time period, and the at least one user behavior belongs to at least one behavior type. The behavior type includes but is not limited to a login type behavior, an APP authentication type behavior, or an API authentication type behavior.

The environment perception service apparatus is configured to: receive the user behavior log from the authentication service apparatus, determine a behavior feature of a first behavior type to which the user behavior described in the user behavior log belongs, and determine a first danger degree value of the user account for the behavior feature of the first behavior type. The first behavior type is one of the at least one behavior type. For example, the first behavior type is the login type behavior, the APP authentication type behavior, or the API authentication type behavior.

The policy control apparatus is configured to adjust, based on the first danger degree value of the user account, access permission of the user account to access a data resource of the application server. For example, when the first danger degree value is high (for example, 60 points), the policy control apparatus adjusts the access permission of the user account from first permission to second permission. The first permission is higher than the second permission. For example, the first permission is permission that a "high-secure" data resource can be accessed, and the second permission is permission that only a "common" data resource can be accessed.

The policy execution apparatus is configured to control (block or allow) access of the user account to the application server based on the access permission of the user account that is delivered by the policy control apparatus.

In embodiments of this application, the environment perception service apparatus obtains the user behavior log of the terminal device, determines the behavior feature of the first behavior type to which the user behavior recorded in the user behavior log belongs. The environment perception service apparatus determines the first danger degree value of the user account based on the behavior feature of the first behavior type. The environment perception service apparatus can directly evaluate a danger degree of the user account based on the behavior feature reflected in the user behavior log, and does not need to perform evaluation until a threat event is generated. Time of evaluating the danger degree is basically synchronized with occurrence time of the user behavior, and the environment perception service apparatus evaluates the danger degree of the user account in time, so that the policy control apparatus can adjust the access permission of the user account in time, to prevent a dangerous user account from accessing the data resource of the application server, and improve security of the zero trust system. In addition, in the conventional method, if a malicious attacker performs brute force cracking on a terminal device (denoted as a "terminal device A"), and if a user name and a password are cracked, although an evaluation result of the environment perception service apparatus on the terminal device A is a high danger degree value, if the attacker logs in to another terminal device (denoted as a "terminal device B") by using the cracked account name and password, the environment perception service apparatus does not detect a danger event on the terminal device B, in this case, the environment perception service apparatus determines that the terminal device B is secure, and the attacker logs in to the cracked account on the terminal device B. In this case, the zero trust system is still in danger. In comparison with the conventional method, in embodiments of this application, an access subject in the zero trust architecture is extended to the user account. When the attacker changes a terminal device to crack the user account and the password in turn, the environment perception service apparatus evaluates the danger degree of the user account based on the user behavior. Even if the attacker changes a terminal device, because the evaluation result is for the user account, the policy control apparatus has adjusted the access permission of the user account, the attacker still cannot access the data resource by using the cracked account. This avoids risks caused because the attacker changes a terminal device.

To better understand this application, the following first describes terms in this application.

The user behavior log is used to record at least one user behavior that occurs on the user account in a first time period, and information related to the user behavior. The information related to the user behavior is, for example, time at which the user behavior occurs, a behavior type to which the user behavior belongs, a behavior result (succeed or fail) of the user behavior, and an IP address of a terminal device that the user account logs in to. For example, the user behavior log is as follows:
{Identity authentication time (auth date): 2020-12-18 16:24:05; identity authentication type (auth type): login (login); identity authentication type detail information (auth type detail): userpass (userpass); user account name (user name): bbcadmin; result (result): fail (fail); access IP address (visitor IP): X.X.X.X; visitor browser (visitor browser): Chrome}.

In the example of the user behavior log, the identity authentication date (auth date) is used to describe time at which the user behavior occurs. The identity authentication type (auth type) is used to describe the behavior type. The user account name (user name) is used to describe the user account. The result (result) is used to describe the result of the user behavior. In a user behavior log, one piece of identity authentication time corresponds to one user behavior. The foregoing user behavior log includes only one piece of identity authentication time, that is, a user behavior log A records one user behavior.

The user behavior includes but is not limited to a login behavior, an APP authentication behavior, or an API authentication behavior.

The behavior type includes but is not limited to a login type behavior, an APP authentication type behavior, or an API authentication type behavior. Each behavior type includes at least one user behavior. For example, the login type behavior includes three login behaviors.

Refer to FIG. 2. The following describes, by using an embodiment, a risk measurement method for a user account provided in this application. The method provided in this embodiment of this application is performed by an environment perception service apparatus. Alternatively, the method is performed by a processor in the environment perception service apparatus. Alternatively, the method is performed by a chip system in the environment perception service apparatus. In this embodiment of this application, an example in which the method is performed by the environment perception service apparatus is used for description.

Step 201. The environment perception service apparatus obtains a user behavior log of a terminal device in a first time period, where the user behavior log records at least one user behavior that occurs on a user account in the first time period, and the at least one user behavior belongs to at least one behavior type.

The environment perception service apparatus receives the user behavior log sent by an authentication service apparatus at an interval of one time period. Duration of the time period is predetermined based on an actual requirement. The duration of the time period is understood as a length of a time window, and the time window is used to restrict time at which the authentication service apparatus sends the user behavior log to the environment perception service apparatus. The length of the time window is set based on duration in which a normal user behavior is generated in a normal case (no malicious attacker attacks). For example, based on an empirical value, in a normal case, an average value of duration in which a user behavior is generated is 5 seconds, and the length of the time window is set to 5 seconds. In this embodiment of this application, an example in which the duration of the time period is 5 seconds is used for description. This is not limited. Optionally, duration of a time period is 4 seconds, 6 seconds, or the like. In an example scenario, a sequence of a plurality of time units on a time axis is t0, t1, t2, t3, and the like. Interval duration between every two adjacent time units in t0, t1, t2, and t3 is 5 seconds (that is, a time period). The environment perception service apparatus receives, at a moment t1, a user behavior log A sent by the authentication service apparatus, where the user behavior log A records at least one user behavior that occurs on the user account in a time period from t0 to t1. The environment perception service apparatus receives, at a moment t2, a user behavior log B sent by the authentication service apparatus, where the user behavior log B records at least one user behavior that occurs on the user account in a time period from t1 to t2. The environment perception service apparatus receives, at a moment t3, a user behavior log C sent by the authentication service apparatus, where the user behavior log C records at least one user behavior that occurs on the user account in a time period from t2 to t3, and the like. Duration from t0 to t1, duration from t1 to t2, and duration from t2 to t3 are all 5 seconds. For example, if current time is the moment t1, the first time period is the time period from t0 to t1. If the current time is the moment t2, the first time period is from t1 to t2. If the current time is the moment t3, the first time period is from t2 to t3.

The following is an example of the user behavior log:
User behavior log A, {Identity authentication time (auth date): 2020-12-18 16:24:05; identity authentication type (auth type): login (login); identity authentication type detail information (auth type detail): userpass (userpass); user account name (user name): bbcadmin; result (result): fail (fail); access IP address (visitor IP): X.X.X.X; visitor browser (visitor browser): Chrome}.

User behavior log B, {Identity authentication time (auth date): 2020-12-18 16:24: 10; identity authentication type (auth type): login (login); identity authentication type detail information (auth type detail): userpass (userpass); user account name (user name): bbcadmin; result (result): fail (fail); access IP address (visitor IP): X.X.X.X; visitor browser (visitor browser): Chrome;
identity authentication time (auth date): 2020-12-18 16:24:11; identity authentication type (auth type): login (login); identity authentication type detail information (auth type detail): userpass (userpass); user account name (user name): bbcadmin; result (result): fail (fail); access IP address (visitor IP): X.X.X.X; visitor browser (visitor browser): Chrome;
identity authentication time (auth date): 2020-12-18 16:24:12; identity authentication type (auth type): login (login); identity authentication type detail information (auth type detail): userpass (userpass); user account name (user name): bbcadmin; result (result): fail (fail); access IP address (visitor IP): X.X.X.X; visitor browser (visitor browser): Chrome}.

The user behavior log B includes three pieces of identity authentication time, that is, the user behavior log B records three user behaviors. In this example, the user behavior log B is described by using three user behaviors only as an example. However, in actual application, because the attacker may use a cracking tool to quickly and frequently perform authentication, more user behaviors may occur within 5 seconds, for example, 10 or 20. By using the foregoing example descriptions of the user behavior log A and the user behavior log B, the user behavior log includes one or two or more user behaviors.

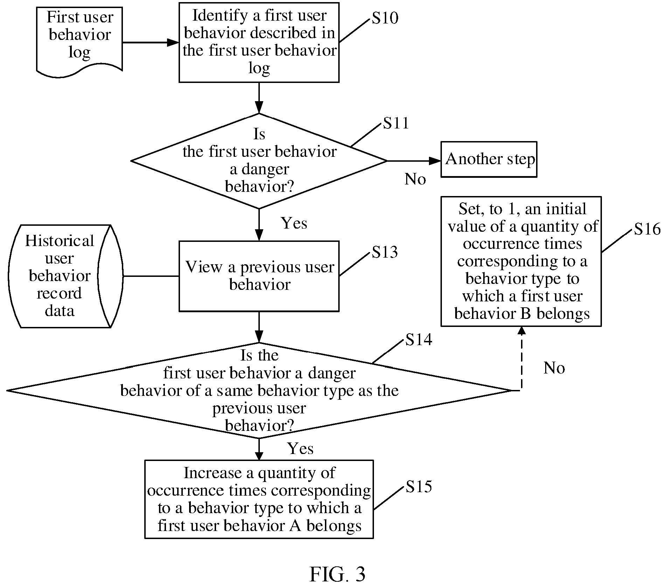

Step 202. The environment perception service apparatus determines a behavior feature of a first behavior type based on the user behavior log, where the first behavior type is one behavior type of the at least one behavior type. For example, the first behavior type is a login type behavior, an APP authentication type behavior, or an API authentication type behavior. Optionally, the behavior feature of the behavior type includes a behavior result of the user behavior and a quantity of consecutive occurrence times of the user behavior, and the behavior result includes succeed or fail. A user behavior whose behavior result is "succeed" is also referred to as a "security behavior", and a user behavior whose behavior result is "fail" is also referred to as a "danger behavior". Refer to FIG. 3. The following describes an example in which an environment perception service apparatus determines a behavior feature of a first behavior type based on a user behavior log. Each time after receiving the user behavior log, the environment perception service apparatus stores the received user behavior log, to form historical user behavior record data (hereinafter referred to as "historical data" for short). A sequence of time units on a time axis is t0, t1, t2, and the like. If a current moment is a moment t2, when the environment perception service apparatus receives a user behavior log of a time period from t1 to t2, the environment perception service apparatus has stored a user behavior log (a historical user behavior record) of a time period from t0 to t1. For example, the user behavior log from t0 to t1 is described by using the foregoing user behavior log B as an example.

S10. The environment perception service apparatus identifies, based on a user behavior log received at a current moment, a user behavior described in the user behavior log. For example, the user behavior log A is used as an example of the user behavior log. A behavior type described in the user behavior log A is a "login type behavior", a quantity of times of the user behavior is 1, and a behavior result is "fail". In this example, to distinguish between the user behavior log received at the current moment and a user behavior log in the historical data, an example in which the current moment is the moment t2 is used, and a user behavior log received at the moment t2 is referred to as a "first user behavior log". A user behavior described in the first user behavior log is referred to as a "first user behavior".

S11. The environment perception service apparatus determines, based on the first user behavior log, whether the first user behavior is a danger behavior.

When the first user behavior is the danger behavior, step S13 is performed. Optionally, when the first user behavior is a security behavior (a user behavior whose behavior result is "succeed"), another step is performed.

S13. When the first user behavior is the danger behavior, the environment perception service apparatus views a previous user behavior recorded in the historical data, where the previous user behavior is a user behavior that is closest to an occurrence moment of the first user behavior and that is before the occurrence moment of the first user behavior.

S14. The environment perception service apparatus determines whether the first user behavior is a danger behavior of a same behavior type as the previous user behavior. If the first user behavior A and the previous user behavior are danger behaviors of the same behavior type, step S15 is performed. Optionally, if the first user behavior B and the previous user behavior are not danger behaviors of the same behavior type, step S16 is performed.

S15. The environment perception service apparatus increases a quantity of occurrence times of a user behavior of the first behavior type (for example, the login type behavior) to which the first user behavior A belongs (the user behavior log received at the current moment describes m consecutive times of the user behavior, and the quantity of occurrence times of the user behavior of the first behavior type is increased by m herein).

S16. The environment perception service apparatus sets, to 1, an initial value of a quantity of occurrence times of a user behavior of the behavior type (for example, an APP authentication type behavior) to which the first user behavior B belongs.

The environment perception service apparatus determines a quantity of consecutive occurrence times of the danger behavior by using the foregoing steps S13, S14, and S15 (or S16).

Step 203. The environment perception service apparatus determines a first danger degree value of the user account for the behavior feature of the first behavior type, where the first danger degree value is a danger degree value of the first behavior type.

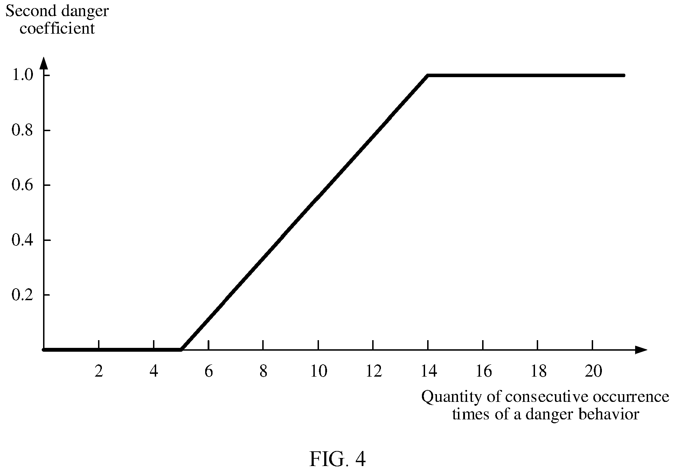

In an optional implementation, for example, FIG. 4 is a schematic diagram of a change of a danger coefficient as a quantity of consecutive occurrence times of a danger behavior increases. In FIG. 4, a horizontal axis represents a quantity of consecutive occurrence times of the danger behavior, and a vertical axis represents the danger coefficient (also referred to as a "second danger coefficient" in this specification). The danger coefficient is a value greater than or equal to 0 and less than or equal to 1. Values on the horizontal axis are divided into a plurality of segments. In this example, the values on the horizontal axis are divided into three segments. In the first segment, as the quantity of consecutive occurrence times of the danger behavior increases, the danger coefficient is approximately unchanged, and the danger coefficient is approximately a small constant (for example, 0). In the second segment, as the quantity of consecutive occurrence times of the danger behavior increases, the danger coefficient increases. In the third segment, as the quantity of consecutive occurrence times of the danger behavior increases, the danger coefficient is approximately unchanged, and the danger coefficient approximates to another larger constant (for example, 1). The danger coefficient corresponding to the quantity of consecutive occurrence times in the third segment is greater than the danger coefficient corresponding to the quantity of consecutive occurrence times in the second segment, and the danger coefficient corresponding to the quantity of consecutive occurrence times in the second segment is greater than the danger coefficient corresponding to the quantity of consecutive occurrence times in the first segment. For example, the environment perception service apparatus determines the second danger coefficient according to Formula (1). ${f}_{i} = \left\{\begin{matrix}a , 1 \leq i < {x}_{1} \\ b \times i , {x}_{1} \leq i \leq {x}_{2} \\ c , i > {x}_{2}\end{matrix}\right.$ Formula (1)

In the first segment, a is a constant greater than 0 and less than or equal to m1, and x1 and m1 are preset based on an actual requirement. For example, x1 = 5 and m1 = 0.01. In the second segment, b is a constant greater than or equal to m2 and less than or equal to m3, and x2, m2, and m3 are preset based on an actual requirement. For example, x2 = 14, m2 = 0.02, and m3 = 0.08. In the third segment, c is a constant greater than m4 and less than or equal to 1. For example, m4 = 0.95. In FIG. 4, an example in which a = 0, b = 0.07, and c = 1 is used for description.

In this example, in a segment range with different consecutive occurrence times, the environment perception service apparatus determines the danger coefficient in different manners. In the first segment, that the quantity of consecutive occurrence times is small (for example, less than 5) may be caused due to a plurality of times of authentication attempted by a user because the user forgets a password, but not necessarily caused due to an attack behavior of brute force cracking of an attacker. Therefore, in the first segment, the danger coefficient is approximately a constant, and the danger coefficient is extremely small (for example, 0). In the second segment, as the quantity of consecutive occurrence times of the danger behavior increases, a probability that the attacker performs brute force cracking increases. Therefore, as the quantity of consecutive occurrence times increases, the danger coefficient increases accordingly. In the third segment, when the quantity of consecutive occurrence times of the danger behavior reaches a specific quantity, it indicates that the probability that the attacker performs brute force cracking is extremely high, and the danger coefficient basically reaches a maximum value (for example, 1). As the quantity of consecutive occurrence times increases, the danger coefficient does not change. Using different manners for determining the danger coefficient in different segments is more suitable for a danger occurrence case in an actual scenario.

The environment perception service apparatus calculates the danger degree value S1 of the first behavior type according to Formula (2).$S 1 = 100 points \times the danger coefficient$ Formula (2)

It should be noted that in this embodiment of this application, the "danger degree value" is equivalent to a "credit score" (or referred to as a "security degree value"). A 100-point system is used as an example. The danger degree value and the credit score can be converted mutually, and the danger degree value = 100 - the credit score. In this embodiment of this application, although determining the "danger degree value" is described, according to an equivalence principle, the method described in this embodiment of this application is equivalent to determining the "credit score" (or the security degree value).

In this embodiment of this application, the environment perception service apparatus obtains the user behavior log, where the user behavior log records the at least one user behavior that occurs on the user account in the first time period. The environment perception service apparatus can determine, based on the user behavior log, the behavior feature of the first behavior type to which the user behavior belongs. The environment perception service apparatus determines the danger degree value of the first behavior type based on the behavior feature of the first behavior type. The first danger degree value can describe the first danger degree value of the user account. The environment perception service apparatus directly evaluates a danger degree of the user account based on the behavior feature of the behavior type, that is, pre-analyzes, based on the user behavior log, a user behavior that may be dangerous, and does not need to perform evaluation until a threat event is generated. Time of evaluating the danger degree is basically synchronized with occurrence time of the user behavior (for example, a difference between the time of evaluating the danger degree and the occurrence time of the user behavior is only 5 seconds). The environment perception service apparatus calculates the danger degree value of the user account once upon receiving the user behavior log, and the environment perception service apparatus evaluates the danger degree of the user account in time, so that a policy control apparatus can adjust access permission of the user account in time based on an evaluation result of the environment perception service apparatus.

Optionally, to improve security of a zero trust system and more accurately evaluate the first danger degree value of the first behavior type, in step 203 in the embodiment corresponding to FIG. 2, information of another dimension is added, and the first danger degree value of the first behavior type is calculated by using information of two dimensions. To be specific, the environment perception service apparatus determines the first danger degree value of the user account based on a position of the first behavior type in a predetermined sequence and the behavior feature of the first behavior type.

The following describes the "position in the predetermined sequence". A model for calculating the first danger degree value is preconfigured in the environment perception service apparatus, the model includes a plurality of (two or more) behavior types, and the plurality of behavior types are arranged in the predetermined sequence. For example, the plurality of behavior types are three behavior types: the login type behavior, the APP authentication type behavior, and the API authentication type behavior. A sequence of the three behavior types is: the login type behavior → the APP authentication type behavior → the API authentication type behavior. To be specific, "the login type behavior" is at a 1st position in the predetermined sequence, "the APP authentication type behavior" is at a 2nd position in the predetermined sequence, and "the API authentication type behavior" is at a 3rd position in the predetermined sequence. Behavior types at different positions correspond to different danger coefficients.

Optionally, a specific method for the environment perception service apparatus to determine the first danger degree value of the user account based on the position of the first behavior type in the predetermined sequence and the behavior feature of the first behavior type is as follows.

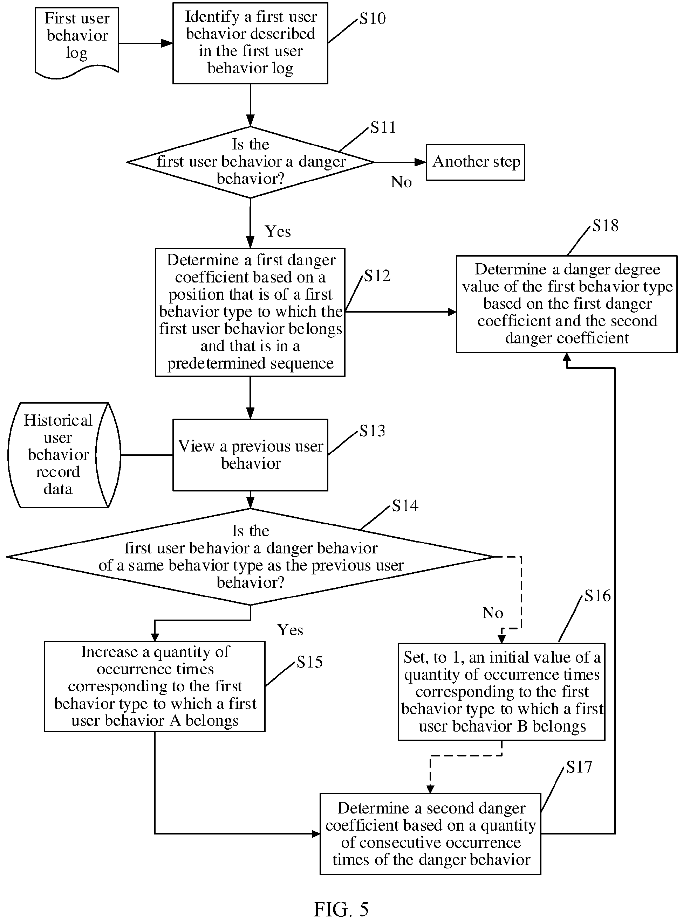

First, refer to FIG. 5. In the example corresponding to FIG. 3, after step S11 and before step S13, step S12 is further included. S12. The environment perception service apparatus determines a first danger coefficient based on the position of the first behavior type in the predetermined sequence. After step S16, steps S17 and S18 are further included.

The following first describes a value of the danger coefficient corresponding to the behavior type. The plurality of behavior types include the first behavior type and a second behavior type. In the predetermined sequence, if the position of the first behavior type is before a position of the second behavior type, a danger coefficient corresponding to the first behavior type is less than a danger coefficient corresponding to the second behavior type. The first behavior type and the second behavior type are any two behavior types in all behavior types included in the model. In an implementation, the environment perception service apparatus configures a first danger coefficient (represented by "*k*") for each behavior type at each position based on a position of the behavior type in the predetermined sequence. A first danger coefficient of a behavior type at a jth position is represented by "*kⱼ*". For example, a first danger coefficient *k*₁ of a behavior type at a 1st position is equal to 0, a first danger coefficient *k*₂ of a behavior type at a 2nd position is equal to 0.1, and a first danger coefficient *k*₃ of a behavior type at a 3rd position is equal to 0.2. A specific value of the first danger coefficient is merely an example for description, and can be set based on an actual requirement. In a second implementation, the environment perception service apparatus determines the first danger coefficient *kⱼ* according to Formula (3). ${k}_{j} = \frac{j - 1}{n}$ Formula (2)

n is the quantity of behavior types, and j is a position of the behavior type in the predetermined sequence.

Then, when the behavior result of the first user behavior is fail, until the occurrence moment of the first user behavior, the environment perception service apparatus determines a quantity of consecutive occurrence times of a user behavior (a danger behavior) whose behavior result is fail and that is included in the first behavior type. For this step, refer to the descriptions of steps S10, S11, and S13 to S16 in the example corresponding to FIG. 3. Details are not described herein again.

S17. The environment perception service apparatus determines a second danger coefficient based on the quantity of consecutive occurrence times of the danger behavior. For this step, refer to the corresponding descriptions of the danger coefficient *fᵢ* in the example corresponding to FIG. 4. Details are not described herein again. To distinguish the first danger coefficient *kⱼ*, *fᵢ* is also referred to as the "second danger coefficient" in this embodiment.

S18. The environment perception service apparatus determines the danger degree value of the first behavior type based on the first danger coefficient and the second danger coefficient. The environment perception service apparatus determines the danger degree value S2 of the first behavior type according to Formula (4). $S 2 = 100 \times {f}_{i} \times \left(1+{k}_{j}\right)$ Formula (4)

*fᵢ* is the second danger coefficient, and *kⱼ* is the first danger coefficient.

In this embodiment, the predetermined sequence of the plurality of behavior types in the model is preset based on a sequence in which user behaviors occurs in an actual service. For example, in the actual service, the user needs to perform a login type operation (for example, system login) first. After performing the login operation, the user may perform an APP authentication type operation, and then perform an API authentication type operation. In this way, the environment perception service apparatus sets the first danger coefficient for each behavior type based on an occurrence sequence of the behavior type in an actual service process. For example, a danger coefficient of the login type behavior is less than a danger coefficient of APP authentication, to be specific, an APP authentication attack poses a greater threat on network security than a login attack. In this embodiment, a danger degree value of the user account that is obtained through calculation by using the position of the behavior type in the predetermined sequence and the behavior feature of the behavior type can better reflect a risk brought by the user behavior in the actual service.

Optionally, to dynamically adjust the access permission of the user account, the environment perception service apparatus can decrease the danger degree value of the first behavior type, that is, recover the credit score of the first behavior type. In this embodiment, the environment perception service apparatus determines a first recovery coefficient of the first behavior type. The first recovery coefficient is used to recover the credit score of the first behavior type. For example, in an application scenario, the first behavior type is the login type behavior. It is assumed that the user forgets the password, and the user repeatedly attempts to log in to a user account A. The environment perception service apparatus decreases a credit score of the user account A from 100 points to 60 points, and the policy control apparatus adjusts access permission of the user account A from first permission to second permission based on the credit score (60 points). The user account A cannot access a "high-secure" data resource. In this case, if the user recalls the password and successfully logs in to the user account A, as a quantity of consecutive occurrence times of successful login to the user account A increases, the environment perception service apparatus can recover the credit score of the user account A (in other words, decrease a danger degree value of the user account A). In this way, the policy control apparatus adjusts the access permission of the user account A from the second permission to the first permission, so that the user account A can access the "high-secure" data resource. In this way, a problem that the access permission of the user account is reduced in the actual service because the credit score of the user account is decreased due to a non-attack behavior is resolved. In this embodiment, the access permission of the user account can be dynamically recovered, to reduce inconvenience caused to the user due to a misoperation of the user.

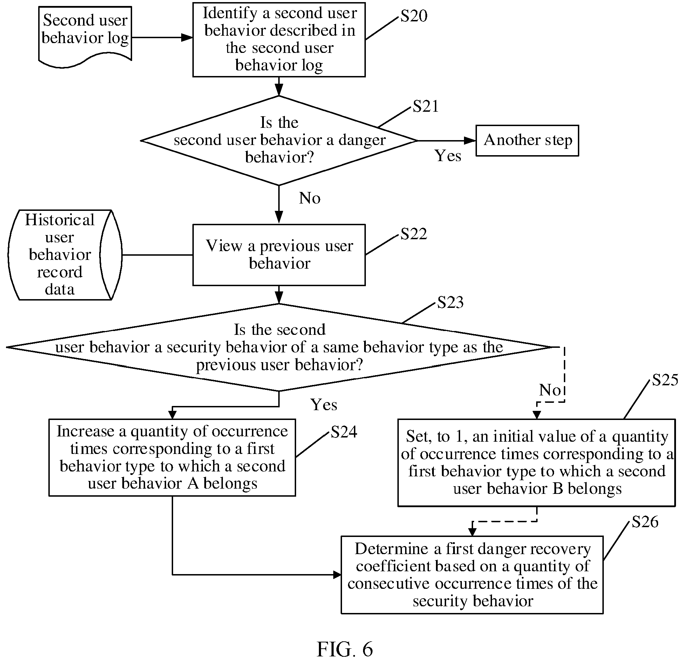

In a first implementation, refer to FIG. 6. The following describes an example of the step in which the environment perception service apparatus determines the first recovery coefficient.

S20. The environment perception service apparatus identifies, based on a user behavior log received at a current moment, a user behavior described in the user behavior log. For example, a behavior type described in the user behavior log is a login type behavior, a quantity of times of the user behavior is 1, and a behavior result is "succeed" (the user behavior is also referred to as a "security behavior"). In this embodiment, to distinguish between the user behavior log received at the current moment and a user behavior log in the historical data, an example in which the current moment is the moment t3 is used, and a user behavior log received at the moment t3 is referred to as a "second user behavior log". A user behavior described in the second user behavior log is referred to as a "second user behavior". The second user behavior occurs after the first user behavior shown in the example corresponding to FIG. 3, and the moment t3 is after the moment t2.

S21. The environment perception service apparatus determines, based on the second user behavior log, whether the second user behavior is a danger behavior. When the second user behavior is not the danger behavior (in other words, the second user behavior is a security behavior), step S22 is performed. Optionally, when the second user behavior is the danger behavior (a user behavior whose behavior result is "fail"), another step is performed.

S22. When the second user behavior is the security behavior, the environment perception service apparatus views a previous user behavior recorded in historical user behavior record data (also referred to as historical data). The previous user behavior of the second user behavior is a user behavior that is closest to an occurrence moment of the second user behavior and that is before the occurrence moment of the second user behavior.

S23. The environment perception service apparatus determines whether the second user behavior is a security behavior of a same behavior type as the previous user behavior. If the second user behavior A and the previous user behavior are security behaviors of the same behavior type, step S24 is performed. Optionally, if the second user behavior B and the previous user behavior are not security behaviors of the same behavior type, step S25 is performed.

S24. The environment perception service apparatus increases a quantity of occurrence times of a user behavior of the first behavior type to which the second user behavior A belongs (the user behavior log received at the current moment describes m consecutive times of the user behavior, and the quantity of occurrence times of the user behavior of the first behavior type is increased by m herein). For example, if a quantity of consecutive occurrence times of a security behavior of the "login type behavior" recorded in the historical data is 2, the quantity of consecutive occurrence times of the security behavior of the"login type behavior" is increased by m on a basis of 2. The quantity of consecutive occurrence times of the security behavior of the"login type behavior" is (2 + m).

S25. The environment perception service apparatus sets, to 1, an initial value of a quantity of occurrence times of a user behavior of the first behavior type to which the second user behavior B belongs.

According to the step procedure of the steps S20 to S25, until the occurrence moment of the second user behavior, the environment perception service apparatus determines a quantity of consecutive occurrence times of a security behavior (a user behavior whose behavior result is succeed) included in the first behavior type. For example, the previous user behavior of the second user behavior is a security behavior, and until the occurrence moment of the second user behavior, the quantity of consecutive occurrence times of the security behavior included in the first behavior type is 2. For another example, the previous user behavior of the second user behavior is a danger behavior, until the occurrence moment of the second user behavior, the quantity of consecutive occurrence times of the security behavior included in the first behavior type is 1.

S26. The environment perception service apparatus determines the first recovery coefficient based on the quantity of consecutive occurrence times of the security behavior.

The environment perception service apparatus calculates the first recovery coefficient (also referred to as a "times recovery coefficient") according to Formula (5). ${d}_{Γ} = \left\{\begin{matrix}ln \left(e-\frac{e - 1}{Z}z\right) , 0 \leq z \leq Z \\ 0 , z > Z\end{matrix}\right.$ Formula (5)

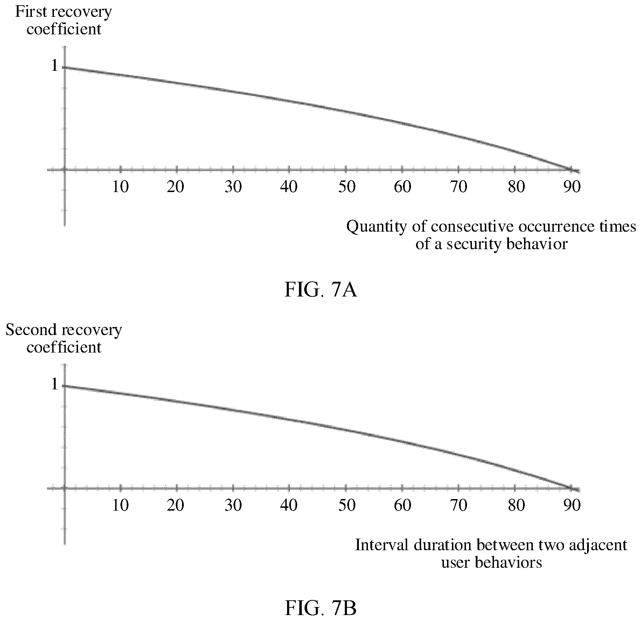

*d*_{Γ} is the first recovery coefficient, Z is a quantity of recovery times, and Z means that the credit score of the user account is recovered to 100 points after the quantity of consecutive occurrence times of the security behavior reaches Z. Z is preset based on an actual requirement. For example, Z is set to 90. z indicates the quantity of consecutive occurrence times of the security behavior. FIG. 7A is a schematic diagram of a change of a first recovery coefficient as a quantity of consecutive occurrence times of a security behavior increases. In FIG. 7A, a horizontal axis represents the quantity of consecutive occurrence times of the security behavior, and a vertical axis represents the first recovery coefficient.

Optionally, in step S18, the environment perception service apparatus determines the danger degree value of the first behavior type based on the first danger coefficient, the second danger coefficient, and the first recovery coefficient. The environment perception service apparatus calculates the credit score of the first behavior type according to Formula (6). ${S}_{3} = 100 \times \left[1-{d}_{Γ}\times \left(1-\frac{{S}_{pre}}{100}\right)\right] \left[1-{f}_{i}\times \left(1+{k}_{j}\right)\right]$ Formula (6)

*kⱼ* is the first danger coefficient, *fᵢ* is the second danger coefficient, *d*_{Γ} is the first recovery coefficient, and *Sₚᵣₑ* is the credit score of the user account that is obtained through previous calculation of *S*₃. The danger degree value of the first behavior type = 100 - *S*₃.

In a second optional implementation, commonalty between the second implementation and the first implementation lies in that the environment perception service apparatus also needs to determine the first recovery coefficient. A difference between the second implementation and the first implementation lies in that the environment perception service apparatus further needs to determine a second recovery coefficient (also referred to as a "time recovery coefficient"), then compare the first recovery coefficient with the second recovery coefficient, and calculate the danger degree value of the first behavior type based on a smaller value of the first recovery coefficient and the second recovery coefficient, the first danger coefficient, and the second danger coefficient.

First, an example in which the environment perception service apparatus determines the second recovery coefficient is described. The environment perception service apparatus determines interval duration between the occurrence moment of the second user behavior and an occurrence moment of a previous user behavior, and determines the second recovery coefficient based on the interval duration. The environment perception service apparatus determines the second recovery coefficient according to Formula (7). ${d}_{t} = \left\{\begin{matrix}ln \left(e-\frac{e - 1}{T}t\right) , 0 \leq t \leq T \\ 0 , t > T\end{matrix}\right.$ Formula (7)

*dₜ* is the second recovery coefficient, T is recovery time, and T means that the credit score of the user account can be recovered to 100 points after interval duration between occurrence moments of two adjacent user behaviors reaches T. T is preset based on an actual requirement. For example, T is set to 90. t represents interval duration between the occurrence moment of the second user behavior and an occurrence moment of a previous user behavior. FIG. 7B is a schematic diagram of a change of a second recovery coefficient as a quantity of consecutive occurrence times of a security behavior increases. In FIG. 7B, a horizontal axis represents the interval duration between the occurrence moment of the second user behavior and an occurrence moment of a previous user behavior, and a vertical axis represents the second recovery coefficient.

Then, the environment perception service apparatus compares the first recovery coefficient obtained by using Formula (5) with the second recovery coefficient obtained by using Formula (7). The environment perception service apparatus calculates the danger degree value of the first behavior type according to Formula (8). ${S}_{4} = 100 \times \left[1-min\left({d}_{t}, {d}_{Γ}\right)\times \left(1-\frac{{S}_{pre}}{100}\right)\right] \left[1-{f}_{i}\times \left(1+{k}_{j}\right)\right]$ Formula (8)

*kⱼ* is the first danger coefficient, *fᵢ* is the second danger coefficient, *d*_{Γ} is the first recovery coefficient, *dₜ* is the second recovery coefficient, min(*dₜ*,*d*_{Γ}) indicates to use a smaller value of *dₜ* and *d*_{Γ}, and *Sₚᵣₑ* is the credit score of the user account obtained through previous calculation of *S*₄. The danger degree value of the first behavior type = 100 - *S*₄. It should be understood that when the first recovery coefficient is less than the second recovery coefficient, the environment perception service apparatus determines the danger degree value of the first behavior type based on the first danger coefficient, the second danger coefficient, and the first recovery coefficient. When the first recovery coefficient is greater than the second recovery coefficient, the environment perception service apparatus determines the danger degree value of the first behavior type based on the first danger coefficient, the second danger coefficient, and the second recovery coefficient.

In the second implementation, the environment perception service apparatus compares the first recovery coefficient with second danger recovery, determines a smaller value of the first recovery coefficient and the second recovery coefficient, and calculates the danger degree value (or the credit score) of the first behavior type based on the smaller danger recovery coefficient, so that the credit score can be recovered quickly. When the credit score is decreased due to the misoperation of the user, inconvenience caused to the user due to the misoperation of the user is reduced.

Optionally, to improve the security of the zero trust system and more accurately evaluate the first danger degree value of the first behavior type, the environment perception service apparatus performs multi-dimensional evaluation on an access subject. The access subject includes the terminal device and a user account logged in on the terminal device. The environment perception service apparatus determines a danger degree value of the terminal device and the danger degree value of the user account, and then calculates a comprehensive danger degree value based on the danger degree value of the terminal device and the danger degree value of the user account.

First, the environment perception service apparatus receives a risk event from the terminal device. The risk event includes a terminal risk event and a traffic threat event. The terminal risk event includes but is not limited to events such as a high-risk port, an unauthorized external connection, a botnet, Trojan horse, and worm virus. The traffic threat event includes but is not limited to a command injection attack, a structured query language (structured query language, SQL) injection attack, malicious encrypted C&C communication, and a DGA (domain generation algorithm) domain name request.

Then, the environment perception service apparatus determines a second danger degree value of the terminal device based on the risk event. In an optional implementation, the terminal device detects the terminal risk event, calculates a danger degree value of the terminal risk event, and reports the traffic threat event to the environment perception service apparatus. The environment perception service apparatus determines a danger degree value of the traffic risk event based on a preset score corresponding to each traffic threat event and a quantity of traffic threat events. The environment perception service apparatus determines the second danger degree value based on the danger degree value of the terminal risk event and the danger degree value of the traffic risk event. In a second optional implementation, the terminal device does not calculate the danger degree value of the terminal risk event, but reports a detected risk event (the terminal risk event and/or the traffic threat event) to the environment perception service apparatus. After receiving the risk event reported by the terminal device, the environment perception service apparatus determines the second danger degree value of the risk event based on a quantity of each risk event and a preset score corresponding to each risk event.

Then, the environment perception service apparatus determines a third risk degree value of the access subject (the terminal device and the user account) based on the first danger degree value of the user account and the second danger degree value of the terminal device. The first danger degree value and the second danger degree value have a corresponding weight. The environment perception service apparatus calculates the third risk degree value according to Formula (9). 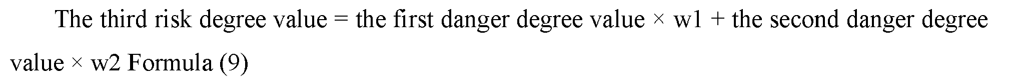 The third risk degree value = the first danger degree value × w1 + the second danger degree value × w2 Formula (9)

w1 is the weight of the first danger degree value, and w2 is the weight of the second danger degree value.

Finally, the environment perception service apparatus outputs the third risk degree value (or a third credit score) to the policy control apparatus. Third credit score = 100 - Third risk degree value.

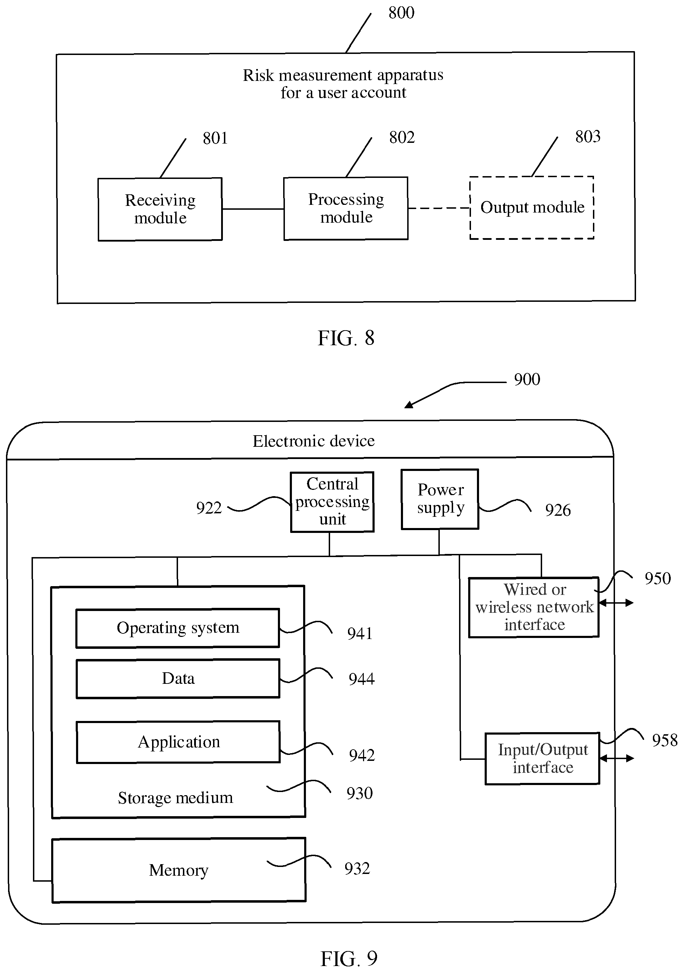

In correspondence to the risk measurement method for a user account provided in embodiments of this application, the following describes an apparatus to which the method is applied. Refer to FIG. 8. This application provides an embodiment of a risk measurement apparatus for a user account. The risk measurement apparatus 800 for a user account includes a receiving module 801 and a processing module 802. Optionally, the risk measurement apparatus for a user account further includes an output module 803. The risk measurement apparatus for a user account is configured to perform a step performed by the environment perception service apparatus in the foregoing method embodiment. In this embodiment, an example in which the risk measurement apparatus for a user account is the environment perception service apparatus is used for description.

The receiving module 801 is configured to obtain a user behavior log of a terminal device in a first time period, where the user behavior log records at least one user behavior that occurs on a user account in the first time period, the at least one user behavior belongs to at least one behavior type, and the behavior type includes a login type behavior, an application APP authentication type behavior, or an application programming interface API authentication type behavior.

The processing module 802 is configured to determine a behavior feature of a first behavior type based on the user behavior log received by the receiving module 801, where the first behavior type is one behavior type of the at least one behavior type.

The processing module 802 is further configured to determine a first danger degree value of the user account for the described behavior feature of the first behavior type, where the first danger degree value is a danger degree value of the first behavior type.

Optionally, the receiving module 801 is replaced with a transceiver module. Optionally, the transceiver module is a transceiver. The transceiver has a sending function and/or a receiving function. Optionally, the transceiver is replaced with a receiver and/or a transmitter.

Optionally, the transceiver module is a communication interface. Optionally, the communication interface is an input/output interface or a transceiver circuit. The input/output interface includes an input interface and an output interface. The transceiver circuit includes an input interface circuit and an output interface circuit.

Optionally, the processing module 802 is a processor, and the processor is a general-purpose processor, a dedicated processor, or the like. Optionally, the processor includes a transceiver unit configured to implement receiving and sending functions. For example, the transceiver unit is a transceiver circuit, an interface, or an interface circuit. The transceiver circuit, interface, or interface circuit configured to implement the receiving and sending functions is separately deployed, and optionally, is integrated and deployed together. The transceiver circuit, the interface, or the interface circuit is configured to read and write code or data. Alternatively, the transceiver circuit, the interface, or the interface circuit is configured to transmit or transfer a signal.

Further, the receiving module 801 is configured to perform step 201 in the embodiment corresponding to FIG. 2. The processing module 802 is configured to perform step 202 and step 203 in the embodiment corresponding to FIG. 2. The processing module 802 is further configured to perform step S10 to step S16 in the example corresponding to FIG. 3, and step S10 to step S18 in the example corresponding to FIG. 5. The processing module 802 is further configured to perform step S20 to step S26 in the example corresponding to FIG. 6.

Optionally, in a possible implementation, the receiving module 801 is further configured to receive a risk event from the terminal device. The processing module 802 is further configured to: determine a second danger degree value of the risk event, and determine a third risk degree value of the terminal device based on the first danger degree value of the user account and the second danger degree value of the risk event.

The output module 803 is further configured to output the third risk degree value obtained by the processing module 802.

Optionally, the output module 803 is replaced with a transceiver module. Optionally, the transceiver module is a transceiver. The transceiver has a sending function and/or a receiving function. Optionally, the transceiver is replaced with a receiver and/or a transmitter.

Optionally, the transceiver module is a communication interface. Optionally, the communication interface is an input/output interface or a transceiver circuit. The input/output interface includes an input interface and an output interface. The transceiver circuit includes an input interface circuit and an output interface circuit.

Refer to FIG. 9. This application provides an electronic device 900. The electronic device 900 is the environment perception service apparatus in the foregoing method embodiment, and is configured to perform a function of the environment perception service apparatus in the foregoing method embodiment. In this embodiment, an example in which the electronic device 900 is a server is used for description.

The server includes one or more central processing units (central processing units, CPU) 922 (for example, one or more processors), a memory 932, and one or more storage media 930 (for example, one or more massive-capacity storage devices) that store an application program 942 or data 944. The memory 932 and the storage medium 930 are transient storage or persistent storage. The program stored in the storage medium 930 includes one or more modules (not shown in the figure), and each module includes a series of instruction operations for the apparatus. Further, the central processing unit 922 is configured to communicate with the storage medium 930 to perform, on the server, the series of instruction operations in the storage medium 930.

Optionally, the server further includes one or more power supplies 926, one or more wired or wireless network interfaces 950, one or more input/output interfaces 958, and/or one or more operating systems 941.

In addition, in an optional design, a function of the receiving module 801 in FIG. 8 is performed by the network interface 950 in FIG. 9. A function of the processing module 802 in FIG. 8 is performed by the central processing unit 922 in FIG. 9. A function of the output module 803 in FIG. 8 is performed by the network interface 950 or the input/output interface 958 in FIG. 9.

An embodiment of this application provides a computer-readable medium. The computer-readable storage medium is configured to store a computer program, and when the computer program is run on a computer, the computer is enabled to perform the method performed by the environment perception service apparatus in the foregoing method embodiment.

An embodiment of this application provides a chip. The chip includes a processor and a communication interface. The communication interface is, for example, an input/output interface, a pin, or a circuit. The processor is configured to read instructions to perform the method performed by the environment perception service apparatus in the foregoing method embodiment.

An embodiment of this application provides a computer program product. When the computer program product runs on a computer, the method performed by the environment perception service apparatus in the foregoing method embodiment is implemented.

Optionally, any processor mentioned above is a general-purpose central processing unit (CPU), a microprocessor, or an application-specific integrated circuit (application-specific integrated circuit, ASIC).

It can be clearly understood by persons skilled in the art that, for the purpose of convenient and brief description, for a detailed working process of the foregoing system, apparatus, and module, refer to a corresponding process in the foregoing method embodiment, and details are not described herein again.

In conclusion, the foregoing embodiments are merely intended for describing the technical solutions of this application, but not for limiting this application. Although this application is described in detail with reference to the foregoing embodiments, persons of ordinary skill in the art should understand that they can still make modifications to the technical solutions described in the foregoing embodiments or make equivalent replacements to some technical features thereof, without departing from the scope of the claims.

## Claims

1. A risk measurement method for a user account, comprising:
obtaining a user behavior log of a terminal device in a first time period (201), wherein the user behavior log records at least one user behavior that occurs on a user account in the first time period, the at least one user behavior belongs to at least one behavior type, and the behavior type comprises a login type behavior, an application, APP, authentication type behavior, or an application programming interface, API, authentication type behavior;
determining a behavior feature of a first behavior type based on the user behavior log (202), wherein the first behavior type is one behavior type of the at least one behavior type; and
determining a first danger degree value of the user account for the determined behavior feature of the first behavior type (203), wherein the first danger degree value is a danger degree value of the first behavior type;
wherein the at least one user behavior comprises a plurality of user behaviors, the plurality of user behaviors belong to at least three or more behavior types, the three or more behavior types are arranged in a predetermined sequence in a model for calculating the first danger degree value, the predetermined sequence of the three or more behavior types in the model is preset based on a sequence in which the plurality of user behaviors occur in an actual service, the login type behavior is at a 1^{st} position in the predetermined sequence, the APP authentication type behavior is at a 2^{nd} position in the predetermined sequence, and the API authentication type behavior is at a 3^{rd} position in the predetermined sequence, and the determining a first danger degree value of the user account for the behavior feature of the first behavior type comprises:
determining the first danger degree value of the user account based on a position of the first behavior type in the predetermined sequence and the behavior feature of the first behavior type.

2. The method according to claim 1, wherein the behavior feature comprises a behavior result and a quantity of consecutive occurrence times of the user behavior, the behavior result comprises succeed or fail, the plurality of user behaviors comprise a first user behavior, and the determining the first danger degree value of the user account based on a position of the first behavior type in the predetermined sequence and the behavior feature of the first behavior type comprises:
determining a first danger coefficient based on the position of the first behavior type in the predetermined sequence;
when a behavior result of the first user behavior is fail, until an occurrence moment of the first user behavior, determining a quantity of consecutive occurrence times of a user behavior whose behavior result is fail and that is comprised in the first behavior type;
determining a second danger coefficient based on the quantity of consecutive occurrence times of the user behavior whose behavior result is fail; and
determining the danger degree value of the first behavior type based on the first danger coefficient and the second danger coefficient.

3. The method according to claim 1 or 2, wherein the at least three or more behavior types comprise the first behavior type and a second behavior type, and in the predetermined sequence, if the position of the first behavior type is before a position of the second behavior type, a danger coefficient corresponding to the first behavior type is less than a danger coefficient corresponding to the second behavior type.

4. The method according to claim 2, wherein the plurality of user behaviors further comprise a second user behavior, and when a behavior result of the second user behavior is succeed, the method further comprises:
until an occurrence moment of the second user behavior, determining a quantity of consecutive occurrence times of a user behavior whose behavior result is succeed and that is comprised in the first behavior type, wherein the occurrence moment of the second user behavior is after the occurrence moment of the first user behavior; and
determining a first recovery coefficient based on the quantity of consecutive occurrence times of the user behavior whose behavior result is succeed; and
the determining the danger degree value of the first behavior type based on the first danger coefficient and the second danger coefficient comprises:
determining the danger degree value of the first behavior type based on the first danger coefficient, the second danger coefficient, and the first recovery coefficient.

5. The method according to claim 4, wherein the method further comprises:
determining interval duration between the occurrence moment of the second user behavior and an occurrence moment of a previous user behavior, and determining a second recovery coefficient based on the interval duration;
comparing the first recovery coefficient with the second recovery coefficient; and
when the first recovery coefficient is less than the second recovery coefficient, performing a step of the determining the danger degree value of the first behavior type based on the first danger coefficient, the second danger coefficient, and the first recovery coefficient.

6. The method according to claim 5, wherein when the first recovery coefficient is greater than the second recovery coefficient, the method further comprises:
determining the danger degree value of the first behavior type based on the first danger coefficient, the second danger coefficient, and the second recovery coefficient.

7. The method according to any one of claims 1 to 6, wherein the method further comprises:
receiving a risk event from the terminal device;
determining a second danger degree value of the risk event;
determining a third risk degree value of the terminal device based on the first danger degree value of the user account and the second danger degree value of the risk event; and
outputting the third risk degree value.

8. A risk measurement apparatus (800) for a user account, comprising:
a receiving module (801), configured to obtain a user behavior log of a terminal device in a first time period, wherein the user behavior log records at least one user behavior that occurs on a user account in the first time period, the at least one user behavior belongs to at least one behavior type, and the behavior type comprises a login type behavior, an application, APP, authentication type behavior, or an application programming interface, API, authentication type behavior; and
a processing module (802), configured to determine a behavior feature of a first behavior type based on the user behavior log received by the receiving module, wherein the first behavior type is one behavior type of the at least one behavior type, wherein
the processing module is further configured to determine a first danger degree value of the user account for the determined behavior feature of the first behavior type, wherein the first danger degree value is a danger degree value of the first behavior type;
wherein the at least one user behavior comprises a plurality of user behaviors, the plurality of user behaviors belong to at least three or more behavior types, and the three or more behavior types are arranged in a predetermined sequence in a model for calculating the first danger degree value, the predetermined sequence of the three or more behavior types in the model is preset based on a sequence in which the plurality of user behaviors occur in an actual service, the login type behavior is at a 1^{st} position in the predetermined sequence, the APP authentication type behavior is at a 2^{nd} position in the predetermined sequence, and the API authentication type behavior is at a 3^{rd} position in the predetermined sequence, wherein
the processing module is further configured to determine the first danger degree value of the user account based on a position of the first behavior type in the predetermined sequence and the behavior feature of the first behavior type.

9. The apparatus according to claim 8, wherein the behavior feature comprises a behavior result and a quantity of consecutive occurrence times of the user behavior, the behavior result comprises succeed or fail, and the plurality of user behaviors comprise a first user behavior, wherein
the processing module is further specifically configured to:
determine a first danger coefficient based on the position of the first behavior type in the predetermined sequence;
when a behavior result of the first user behavior is fail, until an occurrence moment of the first user behavior, determine a quantity of consecutive occurrence times of a user behavior whose behavior result is fail and that is comprised in the first behavior type;
determine a second danger coefficient based on the quantity of consecutive occurrence times of the user behavior whose behavior result is fail; and
determine the danger degree value of the first behavior type based on the first danger coefficient and the second danger coefficient.

10. The apparatus according to claim 9, wherein the plurality of user behaviors further comprise a second user behavior, and when a behavior result of the second user behavior is succeed, the processing module is further specifically configured to:
until an occurrence moment of the second user behavior, determine a quantity of consecutive occurrence times of a user behavior whose behavior result is succeed and that is comprised in the first behavior type, wherein the occurrence moment of the second user behavior is after the occurrence moment of the first user behavior; and
determine a first recovery coefficient based on the quantity of consecutive occurrence times of the user behavior whose behavior result is succeed; and
determine the danger degree value of the first behavior type based on the first danger coefficient, the second danger coefficient, and the first recovery coefficient.

11. The apparatus according to claim 10, wherein the processing module is further configured to:
determine interval duration between the occurrence moment of the second user behavior and an occurrence moment of a previous user behavior, and determine a second recovery coefficient based on the interval duration;
compare the first recovery coefficient with the second recovery coefficient; and
when the first recovery coefficient is less than the second recovery coefficient, determine the danger degree value of the first behavior type based on the first danger coefficient, the second danger coefficient, and the first recovery coefficient.

12. The apparatus according to claim 11, wherein when the first recovery coefficient is greater than the second recovery coefficient, the processing module is further configured to:
determine the danger degree value of the first behavior type based on the first danger coefficient, the second danger coefficient, and the second recovery coefficient.

13. The apparatus according to any one of claims 8 to 12, wherein the apparatus further comprises an output module (803), wherein
the receiving module is further configured to receive a risk event from the terminal device;
the processing module is further configured to: determine a second danger degree value of the risk event, and determine a third risk degree value of the terminal device based on the first danger degree value of the user account and the second danger degree value of the risk event; and
the output module is further configured to output the third risk degree value.

14. A computer-readable storage medium, wherein the computer-readable storage medium is configured to store a computer program, and when the computer program is run on a computer, the computer is enabled to perform the method according to any one of claims 1 to 7.

15. A computer program product, wherein the computer program product comprises computer program code, when the computer program code is executed by a computer, the computer is enabled to perform the method according to any one of claims 1 to 7.

## Patentansprüche

1. Risikomessverfahren für ein Benutzerkonto, das umfasst:
Erhalten eines Benutzerverhaltensprotokolls eines Endgeräts in einer ersten Zeitspanne (201), wobei das Benutzerverhaltensprotokoll mindestens ein Benutzerverhalten aufzeichnet, das auf einem Benutzerkonto in der ersten Zeitspanne auftritt, das mindestens eine Benutzerverhalten zu mindestens einem Verhaltenstyp gehört und der Verhaltenstyp ein Anmeldetypverhalten, ein Anwendungs(APP)-Authentifizierungstypverhalten oder ein Anwendungsprogrammierschnittstellen(API)-Authentifizierungstypverhalten umfasst; Bestimmen eines Verhaltensmerkmals eines ersten Verhaltenstyps basierend auf dem Benutzerverhaltensprotokoll (202), wobei der erste Verhaltenstyp ein Verhaltenstyp des mindestens einen Verhaltenstyps ist; und
Bestimmen eines ersten Gefahrengradwerts des Benutzerkontos für das bestimmte Verhaltensmerkmal des ersten Verhaltenstyps (203), wobei der erste Gefahrengradwert ein Gefahrengradwert des ersten Verhaltenstyps ist;
wobei das mindestens eine Benutzerverhalten eine Vielzahl von Benutzerverhalten umfasst, die Vielzahl von Benutzerverhalten zu mindestens drei oder mehr Verhaltenstypen gehört, die drei oder mehr Verhaltenstypen in einer vorbestimmten Reihenfolge in einem Modell zum Berechnen des ersten Gefahrengradwerts angeordnet sind, die vorbestimmte Reihenfolge der drei oder mehr Verhaltenstypen in dem Modell basierend auf einer Reihenfolge voreingestellt ist, in der die Vielzahl von Benutzerverhalten in einem tatsächlichen Dienst auftritt, das Anmeldetypverhalten sich an einer ersten Position in der vorbestimmten Reihenfolge befindet, das APP-Authentifizierungstypverhalten sich an einer zweiten Position in der vorbestimmten Reihenfolge befindet, und das API-Authentifizierungstypverhalten sich an einer dritten·Position in der vorbestimmten Reihenfolge befindet, und das Bestimmen eines ersten Gefahrengradwerts des Benutzerkontos für das Verhaltensmerkmal des ersten Verhaltenstyps umfasst:
Bestimmen des ersten Gefahrengradwerts des Benutzerkontos basierend auf einer Position des ersten Verhaltenstyps in der vorbestimmten Reihenfolge und dem Verhaltensmerkmal des ersten Verhaltenstyps.

2. Verfahren nach Anspruch 1, wobei das Verhaltensmerkmal ein Verhaltensergebnis und eine Anzahl von aufeinanderfolgenden Auftrittszeiten des Benutzerverhaltens umfasst, das Verhaltensergebnis Erfolg oder Fehlschlag umfasst, die Vielzahl von Benutzerverhalten ein erstes Benutzerverhalten umfasst, und das Bestimmen des ersten Gefahrengradwerts des Benutzerkontos basierend auf einer Position des ersten Verhaltenstyps in der vorbestimmten Reihenfolge und dem Verhaltensmerkmal des ersten Verhaltenstyps umfasst:
Bestimmen eines ersten Gefahrenkoeffizienten basierend auf der Position des ersten Verhaltenstyps in der vorbestimmten Reihenfolge;
wenn ein Verhaltensergebnis des ersten Benutzerverhaltens ein Fehlschlag ist, bis zu einem Auftrittszeitpunkt des ersten Benutzerverhaltens, Bestimmen einer Anzahl von aufeinanderfolgenden Auftrittszeiten eines Benutzerverhaltens, dessen Verhaltensergebnis ein Fehlschlag ist und das in dem ersten Verhaltenstyp umfasst ist; Bestimmen eines zweiten Gefahrenkoeffizienten basierend auf der Anzahl von aufeinanderfolgenden Auftrittszeiten des Benutzerverhaltens, dessen Verhaltensergebnis ein Fehlschlag ist; und
Bestimmen des Gefahrengradwerts des ersten Verhaltenstyps basierend auf dem ersten Gefahrenkoeffizienten und dem zweiten Gefahrenkoeffizienten.

3. Verfahren nach Anspruch 1 oder 2, wobei die mindestens drei oder mehr Verhaltenstypen den ersten Verhaltenstyp und einen zweiten Verhaltenstyp umfassen, und in der vorbestimmten Reihenfolge, falls die Position des ersten Verhaltenstyps vor einer Position des zweiten Verhaltenstyps liegt, ein Gefahrenkoeffizient, der dem ersten Verhaltenstyp entspricht, kleiner als ein Gefahrenkoeffizient, der dem zweiten Verhaltenstyp entspricht, ist.

4. Verfahren nach Anspruch 2, wobei die Vielzahl von Benutzerverhalten ferner ein zweites Benutzerverhalten umfasst, und wenn ein Verhaltensergebnis des zweiten Benutzerverhaltens ein Erfolg ist, das Verfahren ferner umfasst:
bis zu einem Auftrittszeitpunkt des zweiten Benutzerverhaltens, Bestimmen einer Anzahl von aufeinanderfolgenden Auftrittszeiten eines Benutzerverhaltens, dessen Verhaltensergebnis ein Erfolg ist und das in dem ersten Verhaltenstyp umfasst ist, wobei der Auftrittszeitpunkt des zweiten Benutzerverhaltens nach dem Auftrittszeitpunkt des ersten Benutzerverhaltens liegt; und
Bestimmen eines ersten Wiederherstellungskoeffizienten basierend auf der Anzahl von aufeinanderfolgenden Auftrittszeiten des Benutzerverhaltens, dessen Verhaltensergebnis ein Erfolg ist; und
das Bestimmen des Gefahrengradwerts des ersten Verhaltenstyps basierend auf dem ersten Gefahrenkoeffizienten und dem zweiten Gefahrenkoeffizienten umfasst: Bestimmen des Gefahrengradwerts des ersten Verhaltenstyps basierend auf dem ersten Gefahrenkoeffizienten, dem zweiten Gefahrenkoeffizienten und dem ersten Wiederherstellungskoeffizienten.

5. Verfahren nach Anspruch 4, wobei das Verfahren ferner umfasst:
Bestimmen einer Intervalldauer zwischen dem Auftrittszeitpunkt des zweiten Benutzerverhaltens und einem Auftrittszeitpunkt eines vorherigen Benutzerverhaltens, und Bestimmen eines zweiten Wiederherstellungskoeffizienten basierend auf der Intervalldauer;
Vergleichen des ersten Wiederherstellungskoeffizienten mit dem zweiten Wiederherstellungskoeffizienten; und
wenn der erste Wiederherstellungskoeffizient kleiner als der zweite Wiederherstellungskoeffizient ist, Durchführen eines Schritts des Bestimmens des Gefahrengradwerts des ersten Verhaltenstyps basierend auf dem ersten Gefahrenkoeffizienten, dem zweiten Gefahrenkoeffizienten und dem ersten Wiederherstellungskoeffizienten.

6. Verfahren nach Anspruch 5, wobei, wenn der erste Wiederherstellungskoeffizient größer als der zweite Wiederherstellungskoeffizient ist, das Verfahren ferner umfasst: Bestimmen des Gefahrengradwerts des ersten Verhaltenstyps basierend auf dem ersten Gefahrenkoeffizienten, dem zweiten Gefahrenkoeffizienten und dem zweiten Wiederherstellungskoeffizienten.

7. Verfahren nach einem der Ansprüche 1 bis 6, wobei das Verfahren ferner umfasst:
Empfangen eines Risikoereignisses von dem Endgerät;
Bestimmen eines zweiten Gefahrengradwerts des Risikoereignisses;
Bestimmen eines dritten Risikogradwerts des Endgeräts basierend auf dem ersten Gefahrengradwert des Benutzerkontos und dem zweiten Gefahrengradwert des Risikoereignisses; und
Ausgeben des dritten Risikogradwerts.

8. Risikomessvorrichtung (800) für ein Benutzerkonto, die umfasst:
ein Empfangsmodul (801), das konfiguriert ist, um ein Benutzerverhaltensprotokoll eines Endgeräts in einer ersten Zeitspanne zu erhalten, wobei das Benutzerverhaltensprotokoll mindestens ein Benutzerverhalten aufzeichnet, das auf einem Benutzerkonto in der ersten Zeitspanne auftritt, das mindestens eine Benutzerverhalten zu mindestens einem Verhaltenstyp gehört und der Verhaltenstyp ein Anmeldetypverhalten, ein Anwendungs(APP)-Authentifizierungstypverhalten oder ein
Anwendungsprogrammierschnittstellen(API)-Authentifizierungstypverhalten umfasst; und ein Verarbeitungsmodul (802), das konfiguriert ist, um ein Verhaltensmerkmal eines ersten Verhaltenstyps basierend auf dem Benutzerverhaltensprotokoll, das durch das Empfangsmodul empfangen wird, zu bestimmen, wobei der erste Verhaltenstyp ein Verhaltenstyp des mindestens einen Verhaltenstyps ist, wobei das Verarbeitungsmodul ferner konfiguriert ist, um einen ersten Gefahrengradwert des Benutzerkontos für das bestimmte Verhaltensmerkmal des ersten Verhaltenstyps zu bestimmen, wobei der erste Gefahrengradwert ein Gefahrengradwert des ersten Verhaltenstyps ist;
wobei das mindestens eine Benutzerverhalten eine Vielzahl von Benutzerverhalten umfasst, die Vielzahl von Benutzerverhalten zu mindestens drei oder mehr Verhaltenstypen gehört, und die drei oder mehr Verhaltenstypen in einer vorbestimmten Reihenfolge in einem Modell zum Berechnen des ersten Gefahrengradwerts angeordnet sind, die vorbestimmte Reihenfolge der drei oder mehr Verhaltenstypen in dem Modell basierend auf einer Reihenfolge voreingestellt ist, in der die Vielzahl von Benutzerverhalten in einem tatsächlichen Dienst auftritt, das Anmeldetypverhalten sich an einer ersten Position in der vorbestimmten Reihenfolge befindet, das APP-Authentifizierungstypverhalten sich an einer zweiten Position in der vorbestimmten Reihenfolge befindet, und das API-Authentifizierungstypverhalten sich an einer dritten Position in der vorbestimmten Reihenfolge befindet, wobei das Verarbeitungsmodul ferner konfiguriert ist, um den ersten Gefahrengradwert des Benutzerkontos basierend auf einer Position des ersten Verhaltenstyps in der vorbestimmten Reihenfolge und dem Verhaltensmerkmal des ersten Verhaltenstyps zu bestimmen.

9. Vorrichtung nach Anspruch 8, wobei das Verhaltensmerkmal ein Verhaltensergebnis und eine Anzahl von aufeinanderfolgenden Auftrittszeiten des Benutzerverhaltens umfasst, das Verhaltensergebnis Erfolg oder Fehlschlag umfasst, und die Vielzahl von Benutzerverhalten ein erstes Benutzerverhalten umfasst, wobei das Verarbeitungsmodul ferner speziell konfiguriert ist zum:
Bestimmen eines ersten Gefahrenkoeffizienten basierend auf der Position des ersten Verhaltenstyps in der vorbestimmten Reihenfolge;
wenn ein Verhaltensergebnis des ersten Benutzerverhaltens ein Fehlschlag ist, bis zu einem Auftrittszeitpunkt des ersten Benutzerverhaltens, Bestimmen einer Anzahl von aufeinanderfolgenden Auftrittszeiten eines Benutzerverhaltens, dessen Verhaltensergebnis ein Fehlschlag ist und das in dem ersten Verhaltenstyp umfasst ist; Bestimmen eines zweiten Gefahrenkoeffizienten basierend auf der Anzahl von aufeinanderfolgenden Auftrittszeiten des Benutzerverhaltens, dessen Verhaltensergebnis ein Fehlschlag ist; und
Bestimmen des Gefahrengradwerts des ersten Verhaltenstyps basierend auf dem ersten Gefahrenkoeffizienten und dem zweiten Gefahrenkoeffizienten.

10. Vorrichtung nach Anspruch 9, wobei die Vielzahl von Benutzerverhalten ferner ein zweites Benutzerverhalten umfasst, und wenn ein Verhaltensergebnis des zweiten Benutzerverhaltens Erfolg ist, das Verarbeitungsmodul ferner speziell konfiguriert ist zum:
bis zu einem Auftrittszeitpunkt des zweiten Benutzerverhaltens, Bestimmen einer Anzahl von aufeinanderfolgenden Auftrittszeiten eines Benutzerverhaltens, dessen Verhaltensergebnis ein Erfolg ist und das in dem ersten Verhaltenstyp umfasst ist, wobei der Auftrittszeitpunkt des zweiten Benutzerverhaltens nach dem Auftrittszeitpunkt des ersten Benutzerverhaltens liegt; und
Bestimmen eines ersten Wiederherstellungskoeffizienten basierend auf der Anzahl von aufeinanderfolgenden Auftrittszeiten des Benutzerverhaltens, dessen Verhaltensergebnis ein Erfolg ist; und
Bestimmen des Gefahrengradwerts des ersten Verhaltenstyps basierend auf dem ersten Gefahrenkoeffizienten, dem zweiten Gefahrenkoeffizienten und dem ersten Wiederherstellungskoeffizienten.

11. Vorrichtung nach Anspruch 10, wobei das Verarbeitungsmodul ferner konfiguriert ist zum:
Bestimmen einer Intervalldauer zwischen dem Auftrittszeitpunkt des zweiten Benutzerverhaltens und einem Auftrittszeitpunkt eines vorherigen Benutzerverhaltens, und Bestimmen eines zweiten Wiederherstellungskoeffizienten basierend auf der Intervalldauer;
Vergleichen des ersten Wiederherstellungskoeffizienten mit dem zweiten Wiederherstellungskoeffizienten; und
wenn der erste Wiederherstellungskoeffizient kleiner als der zweite Wiederherstellungskoeffizient ist, Bestimmen des Gefahrengradwerts des ersten Verhaltenstyps basierend auf dem ersten Gefahrenkoeffizienten, dem zweiten Gefahrenkoeffizienten und dem ersten Wiederherstellungskoeffizienten.

12. Vorrichtung nach Anspruch 11, wobei, wenn der erste Wiederherstellungskoeffizient größer als der zweite Wiederherstellungskoeffizient ist, das Verarbeitungsmodul ferner konfiguriert ist zum:
Bestimmen des Gefahrengradwerts des ersten Verhaltenstyps basierend auf dem ersten Gefahrenkoeffizienten, dem zweiten Gefahrenkoeffizienten und dem zweiten Wiederherstellungskoeffizienten.

13. Vorrichtung nach einem der Ansprüche 8 bis 12, wobei die Vorrichtung ferner ein Ausgabemodul (803) umfasst, wobei
das Empfangsmodul ferner konfiguriert ist, um ein Risikoereignis von dem Endgerät zu empfangen;
das Verarbeitungsmodul ferner konfiguriert ist zum: Bestimmen eines zweiten Gefahrengradwerts des Risikoereignisses, und Bestimmen eines dritten Risikogradwerts des Endgeräts basierend auf dem ersten Gefahrengradwert des Benutzerkontos und dem zweiten Gefahrengradwert des Risikoereignisses; und das Ausgabemodul ferner konfiguriert ist, um den dritten Risikogradwert auszugeben.

14. Computerlesbares Speicherungsmedium, wobei das computerlesbare Speicherungsmedium konfiguriert ist, um ein Computerprogramm zu speichern, und, wenn das Computerprogramm auf einem Computer laufen gelassen wird, der Computer aktiviert wird, um das Verfahren nach einem der Ansprüche 1 bis 7 durchzuführen.

15. Computerprogrammprodukt, wobei das Computerprogrammprodukt Computerprogrammcode umfasst, wenn der Computerprogrammcode durch einen Computer ausgeführt wird, der Computer aktiviert wird, um das Verfahren nach einem der Ansprüche 1 bis 7 durchzuführen.

## Revendications

1. Procédé de mesure de risque pour un compte utilisateur, comprenant :
l'obtention d'un journal de comportement d'utilisateur d'un dispositif terminal dans une première période de temps (201), dans lequel le journal de comportement d'utilisateur enregistre au moins un comportement d'utilisateur qui se produit sur un compte utilisateur dans la première période de temps, l'au moins un comportement d'utilisateur appartient à au moins un type de comportement, et le type de comportement comprend un comportement de type connexion, un comportement de type authentification d'application, APP, ou un comportement de type authentification d'interface de programmation d'application, API ;
la détermination d'une caractéristique de comportement d'un premier type de comportement sur la base du journal de comportement d'utilisateur (202), dans lequel le premier type de comportement est un type de comportement de l'au moins un type de comportement ; et
la détermination d'une première valeur de degré de danger du compte utilisateur pour la caractéristique de comportement déterminée du premier type de comportement (203), dans lequel la première valeur de degré de danger est une valeur de degré de danger du premier type de comportement ;
dans lequel l'au moins un comportement d'utilisateur comprend une pluralité de comportements d'utilisateur, la pluralité de comportements d'utilisateur appartient à au moins trois types de comportement ou plus, les trois types de comportement ou plus sont agencés dans une séquence prédéterminée dans un modèle pour le calcul de la première valeur de degré de danger, la séquence prédéterminée des trois types de comportement ou plus dans le modèle est prédéfinie sur la base d'une séquence dans laquelle la pluralité de comportements d'utilisateur se produisent dans un service réel, le comportement de type connexion se trouve au niveau d'une 1^{re} position dans la séquence prédéterminée, le comportement de type authentification APP se trouve au niveau d'une 2^{e} position dans la séquence prédéterminée, et le comportement de type authentification API se trouve au niveau d'une 3^{e} position dans la séquence prédéterminée, et la détermination d'une première valeur de degré de danger du compte utilisateur pour la caractéristique de comportement du premier type de comportement comprend :
la détermination de la première valeur de degré de danger du compte utilisateur sur la base d'une position du premier type de comportement dans la séquence prédéterminée et de la caractéristique de comportement du premier type de comportement.

2. Procédé selon la revendication 1, dans lequel la caractéristique de comportement comprend un résultat de comportement et un nombre d'occurrences consécutives du comportement d'utilisateur, le résultat de comportement comprend réussite ou échec, la pluralité de comportements d'utilisateur comprend un premier comportement d'utilisateur, et la détermination de la première valeur de degré de danger du compte utilisateur sur la base d'une position du premier type de comportement dans la séquence prédéterminée et de la caractéristique de comportement du premier type de comportement comprend :
la détermination d'un premier coefficient de danger sur la base de la position du premier type de comportement dans la séquence prédéterminée ;
lorsqu'un résultat de comportement du premier comportement d'utilisateur est échec, jusqu'à un moment d'occurrence du premier comportement d'utilisateur, la détermination d'un nombre d'occurrences consécutives d'un comportement d'utilisateur dont le résultat de comportement est échec et qui est compris dans le premier type de comportement ;
la détermination d'un second coefficient de danger sur la base du nombre d'occurrences consécutives du comportement d'utilisateur dont le résultat de comportement est échec ; et
la détermination de la valeur de degré de danger du premier type de comportement sur la base du premier coefficient de danger et du second coefficient de danger.

3. Procédé selon la revendication 1 ou 2, dans lequel les au moins trois types de comportement ou plus comprennent le premier type de comportement et un deuxième type de comportement, et dans la séquence prédéterminée, si la position du premier type de comportement est avant une position du deuxième type de comportement, un coefficient de danger correspondant au premier type de comportement est inférieur à un coefficient de danger correspondant au deuxième type de comportement.

4. Procédé selon la revendication 2, dans lequel la pluralité de comportements d'utilisateur comprend en outre un second comportement d'utilisateur, et lorsqu'un résultat de comportement du second comportement d'utilisateur est réussite, le procédé comprend en outre :
jusqu'à un moment d'occurrence du second comportement d'utilisateur, la détermination d'un nombre d'occurrences consécutives d'un comportement d'utilisateur dont le résultat de comportement est réussite et qui est compris dans le premier type de comportement, dans lequel le moment d'occurrence du second comportement d'utilisateur est postérieur au moment d'occurrence du premier comportement d'utilisateur ; et
la détermination d'un premier coefficient de récupération sur la base du nombre d'occurrences consécutives du comportement d'utilisateur dont le résultat de comportement est réussite ; et
la détermination de la valeur de degré de danger du premier type de comportement sur la base du premier coefficient de danger et du second coefficient de danger comprend :
la détermination de la valeur de degré de danger du premier type de comportement sur la base du premier coefficient de danger, du second coefficient de danger et du premier coefficient de récupération.

5. Procédé selon la revendication 4, dans lequel le procédé comprend en outre :
la détermination d'une durée d'intervalle entre le moment d'occurrence du second comportement d'utilisateur et un moment d'occurrence d'un comportement d'utilisateur précédent, et la détermination d'un second coefficient de récupération sur la base de la durée d'intervalle ;
la comparaison du premier coefficient de récupération avec le second coefficient de récupération ; et
lorsque le premier coefficient de récupération est inférieur au second coefficient de récupération, la réalisation d'une étape de détermination de la valeur de degré de danger du premier type de comportement sur la base du premier coefficient de danger, du second coefficient de danger et du premier coefficient de récupération.

6. Procédé selon la revendication 5, dans lequel lorsque le premier coefficient de récupération est supérieur au second coefficient de récupération, le procédé comprend en outre :
la détermination de la valeur de degré de danger du premier type de comportement sur la base du premier coefficient de danger, du second coefficient de danger et du second coefficient de récupération.

7. Procédé selon l'une quelconque des revendications 1 à 6, dans lequel le procédé comprend en outre :
la réception d'un événement à risque à partir du dispositif terminal ;
la détermination d'une seconde valeur de degré de danger de l'événement à risque ; la détermination d'une troisième valeur de degré de risque du dispositif terminal sur la base de la première valeur de degré de danger du compte utilisateur et de la seconde valeur de degré de danger de l'événement à risque ; et
la sortie de la troisième valeur de degré de risque.

8. Appareil de mesure de risque (800) pour un compte utilisateur, comprenant :
un module de réception (801), configuré pour obtenir un journal de comportement d'utilisateur d'un dispositif terminal dans une première période de temps, dans lequel le journal de comportement d'utilisateur enregistre au moins un comportement d'utilisateur qui se produit sur un compte utilisateur dans la première période de temps, l'au moins un comportement d'utilisateur appartient à au moins un type de comportement, et le type de comportement comprend un comportement de type connexion, un comportement de type authentification d'application, APP, ou un comportement de type authentification d'interface de programmation d'application, API ; et
un module de traitement (802), configuré pour déterminer une caractéristique de comportement d'un premier type de comportement sur la base du journal de comportement d'utilisateur reçu par le module de réception, dans lequel le premier type de comportement est un type de comportement de l'au moins un type de comportement, dans lequel
le module de traitement est en outre configuré pour déterminer une première valeur de degré de danger du compte utilisateur pour la caractéristique de comportement déterminée du premier type de comportement, dans lequel la première valeur de degré de danger est une valeur de degré de danger du premier type de comportement ;
dans lequel l'au moins un comportement d'utilisateur comprend une pluralité de comportements d'utilisateur, la pluralité de comportements d'utilisateur appartient à au moins trois types de comportement ou plus, et les trois types de comportement ou plus sont agencés dans une séquence prédéterminée dans un modèle pour le calcul de la première valeur de degré de danger, la séquence prédéterminée des trois types de comportement ou plus dans le modèle est prédéfinie sur la base d'une séquence dans laquelle la pluralité de comportements d'utilisateur se produit dans un service réel, le comportement de type connexion se trouve au niveau d'une 1^{re} position dans la séquence prédéterminée, le comportement de type authentification APP se trouve au niveau d'une 2^{e} position dans la séquence prédéterminée, et le comportement de type authentification API se trouve au niveau d'une 3^{e} position dans la séquence prédéterminée, dans lequel
le module de traitement est en outre configuré pour déterminer la première valeur de degré de danger du compte utilisateur sur la base d'une position du premier type de comportement dans la séquence prédéterminée et de la caractéristique de comportement du premier type de comportement.

9. Appareil selon la revendication 8, dans lequel la caractéristique de comportement comprend un résultat de comportement et un nombre d'occurrences consécutives du comportement d'utilisateur, le résultat de comportement comprend réussite ou échec, et la pluralité de comportements d'utilisateur comprend un premier comportement d'utilisateur, dans lequel
le module de traitement est en outre spécifiquement configuré pour :
déterminer un premier coefficient de danger sur la base de la position du premier type de comportement dans la séquence prédéterminée ;
lorsqu'un résultat de comportement du premier comportement d'utilisateur est échec, jusqu'à un moment d'occurrence du premier comportement d'utilisateur, déterminer un nombre d'occurrences consécutives d'un comportement d'utilisateur dont le résultat de comportement est échec et qui est compris dans le premier type de comportement ; déterminer un second coefficient de danger sur la base du nombre d'occurrences consécutives du comportement d'utilisateur dont le résultat de comportement est échec ; et
déterminer la valeur de degré de danger du premier type de comportement sur la base du premier coefficient de danger et du second coefficient de danger.

10. Appareil selon la revendication 9, dans lequel la pluralité de comportements d'utilisateur comprend en outre un second comportement d'utilisateur, et lorsqu'un résultat de comportement du second comportement d'utilisateur est réussite, le module de traitement est en outre spécifiquement configuré pour :
jusqu'à un moment d'occurrence du second comportement d'utilisateur, déterminer un nombre d'occurrences consécutives d'un comportement d'utilisateur dont le résultat de comportement est réussite et qui est compris dans le premier type de comportement, dans lequel le moment d'occurrence du second comportement d'utilisateur est postérieur au moment d'occurrence du premier comportement d'utilisateur ; et déterminer un premier coefficient de récupération sur la base du nombre d'occurrences consécutives du comportement d'utilisateur dont le résultat de comportement est réussite ; et
déterminer la valeur de degré de danger du premier type de comportement sur la base du premier coefficient de danger, du second coefficient de danger et du premier coefficient de récupération.

11. Appareil selon la revendication 10, dans lequel le module de traitement est en outre configuré pour :
déterminer une durée d'intervalle entre le moment d'occurrence du second comportement d'utilisateur et un moment d'occurrence d'un comportement d'utilisateur précédent, et déterminer un second coefficient de récupération sur la base de la durée d'intervalle ;
comparer le premier coefficient de récupération avec le second coefficient de récupération ; et
lorsque le premier coefficient de récupération est inférieur au second coefficient de récupération, déterminer la valeur de degré de danger du premier type de comportement sur la base du premier coefficient de danger, du second coefficient de danger et du premier coefficient de récupération.

12. Appareil selon la revendication 11, dans lequel, lorsque le premier coefficient de récupération est supérieur au second coefficient de récupération, le module de traitement est en outre configuré pour :
déterminer la valeur de degré de danger du premier type de comportement sur la base du premier coefficient de danger, du second coefficient de danger et du second coefficient de récupération.

13. Appareil selon l'une quelconque des revendications 8 à 12, dans lequel l'appareil comprend en outre un module de sortie (803), dans lequel
le module de réception est en outre configuré pour recevoir un événement à risque à partir du dispositif terminal ;
le module de traitement est en outre configuré pour : déterminer une seconde valeur de degré de danger de l'événement de risque, et déterminer une troisième valeur de degré de risque du dispositif terminal sur la base de la première valeur de degré de danger du compte utilisateur et de la seconde valeur de degré de danger de l'événement à risque ; et
le module de sortie est en outre configuré pour sortir la troisième valeur de degré de risque.

14. Support de stockage lisible par ordinateur, dans lequel le support de stockage lisible par ordinateur est configuré pour stocker un programme informatique, et lorsque le programme informatique est exécuté sur un ordinateur, l'ordinateur est apte à réaliser le procédé selon l'une quelconque des revendications 1 à 7.

15. Produit-programme d'ordinateur, dans lequel le produit-programme d'ordinateur comprend un code de programme informatique, lorsque le code de programme informatique est exécuté par un ordinateur, l'ordinateur est apte à réaliser le procédé selon l'une quelconque des revendications 1 à 7.
